(19) Europäisches Patentamt
European Patent Office
Office européen des brevets

(11) EP 1 838 765 B1

(12) # FASCICULE DE BREVET EUROPEEN

(45) Date de publication et mention de la délivrance du brevet:
**04.08.2010 Bulletin 2010/31**

(21) Numéro de dépôt: **05824743.8**

(22) Date de dépôt: **30.12.2005**

(51) Int Cl.:
***C08J 3/22*** *(2006.01)* ***C08L 25/00*** *(2006.01)*
***C08F 212/08*** *(2006.01)*

(86) Numéro de dépôt international:
**PCT/EP2005/014134**

(87) Numéro de publication internationale:
**WO 2006/069792 (06.07.2006 Gazette 2006/27)**

(54) **NANOPARTICULES DE POLYVINYLAROMATIQUE FONCTIONNALISE**

NANOPARTIKEL VON FUNKTIONALISIERTEM POLYVINYLAROMAT

FUNCTIOANALISED POLYVINYLAROMATIC NANOPARTICLES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.12.2004 FR 0414125**

(43) Date de publication de la demande:
**03.10.2007 Bulletin 2007/40**

(73) Titulaires:
- **Michelin Recherche et Technique S.A.**
  **1763 Granges-Paccot (CH)**
- **Société de Technologie Michelin**
  **63000 Clermont-Ferrand (FR)**

(72) Inventeurs:
- **GANDON-PAIN, Sylvie**
  **F-63100 Clermont-Ferrand (FR)**
- **HUT, Alain**
  **63670 Le Cendre (FR)**
- **LAPRA, Arnaud**
  **63450 Saint Saturnin (FR)**

(74) Mandataire: **Le Cam, Véronique Marie Christine**
**23, place des Carmes-Déchaux**
**Clermont-Ferrand - Cédex 9, 63040 (FR)**

(56) Documents cités:
**EP-A- 1 057 622** **EP-A- 1 116 580**
**EP-A- 1 475 232**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 838 765 B1

## Description

La présente invention est relative aux charges renforçantes susceptibles de renforcer des matrices polymériques, plus particulièrement aux charges renforçantes du type organique ainsi qu'à leur utilisation pour renforcer de telles matrices, notamment des matrices élastomériques entrant dans la fabrication des pneumatiques pour véhicules automobiles.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure. Une solution efficace à ce problème a été trouvée, au cours des quinze dernières années, grâce à la mise au point de nouvelles charges du type inorganiques, véritablement renforçantes, encore connues sous le nom de *"non-black fillers"*, tout particulièrement des silices hautement dispersibles (HDS pour *"Highly Dispersible Silica"*), qui se sont révélées capables de remplacer dans leur fonction de charge renforçante les noirs de carbone conventionnels pour pneumatiques.

Toutefois, ces charges inorganiques renforçantes, en raison d'une densité légèrement supérieure pour un pouvoir renforçant équivalent, présentent l'inconvénient connu d'augmenter le poids des matrices polymériques qu'elles renforcent, comparativement à l'emploi de noir de carbone, ce qui est plutôt antinomique d'un autre objectif plus général qui est celui d'allègement des pneumatiques et donc des véhicules les comportant.

Poursuivant leurs recherche, les Demanderesses ont découvert certaines charges organiques de synthèse qui, de manière inattendue, peuvent être utilisées comme de véritables charges renforçantes, c'est-à-dire sont capables de remplacer des noirs de carbone conventionnels pour pneumatiques tout comme des silices HDS.

Ces nouvelles charges organiques de synthèse, grâce à une densité environ deux fois moindre, permettent de réduire de manière très significative le poids des matrices polymériques qu'elles renforcent et celui des articles en polymère les contenant, notamment les articles en caoutchouc tels que pneumatiques, ceci sans compromis sur les propriétés d'usage de ces articles.

En conséquence, un premier objet de l'invention concerne des nanoparticules de polyvinylaromatique (ci-après, en abrégé "PVAr") fonctionnalisé et réticulé, utilisables notamment comme charge renforçante dans une matrice polymérique, caractérisées en ce que ledit polyvinylaromatique est un copolymère d'au moins :

- un comonomère "A" vinylaromatique ;
- un comonomère "B" porteur d'une fonction notée Z de formule = Si - X, X représentant un groupe hydroxyle ou hydrolysable ;
- un comonomère "C" réticulant au moins bifonctionnel et polymérisable par réaction d'addition, le comonomère C pouvant être vinylaromatique, dans ce cas identique ou différent du comonomère A, ou non vinylaromatique.

L'invention a également pour objet l'utilisation de nanoparticules selon l'invention pour le renforcement d'une matrice polymérique, notamment élastomérique.

L'invention a particulièrement pour objet l'utilisation de nanoparticules selon l'invention pour le renforcement d'articles finis ou produits semi-finis en caoutchouc, ces articles ou produits semi-finis étant notamment destinés à tout système de liaison au sol des véhicules automobile, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation de nanoparticules selon l'invention pour le renforcement de pneumatiques.

L'invention a également pour objet un masterbatch comportant des nanoparticules selon l'invention, noyées dans une matrice polymérique, notamment élastomérique.

L'invention a également pour objet un procédé d'obtention d'un tel masterbatch comportant au moins un polymère, notamment élastomère, et une charge sous forme de nanoparticules, ledit procédé comportant les étapes suivantes :

- partir d'un latex du polymère et d'un latex de la charge sous forme de nanoparticules ;
- les mélanger intimement ;
- faire précipiter le mélange ainsi obtenu ;
- puis laver et sécher le précipité ainsi obtenu,

et étant caractérisé en ce que ladite charge comporte des nanoparticules du PVAr fonctionnalisé Z ci-dessus.

L'invention a également pour objet une composition polymérique comportant au moins un polymère, notamment élastomère, des nanoparticules selon l'invention et un agent de couplage assurant la liaison entre le polymère et la surface des nanoparticules.

L'invention ainsi que ses avantages seront aisément compris à la lumière de la description et des exemples de réalisation qui suivent, ainsi que des figures relatives à ces exemples qui représentent:

- un cliché de microscopie électronique (MET) réalisé sur un échantillon de nanoparticules de PVAr en émulsion aqueuse, conformes à l'invention (Fig. 1) ;
- un cliché de MET réalisé sur un échantillon de composition de caoutchouc renforcée par ces nanoparticules de PVAr (Fig. 2) ;
- des courbes de variation de module en fonction de l'allongement pour différentes compositions de caoutchouc, renforcées ou non par les nanoparticules de l'invention (Fig. 3 à Fig. 5).

## 1. MESURES ET TESTS UTILISES

### I-1. Caractérisation de la charge PVAr

La charge de PVAr décrite ci-après consiste en des "nanoparticules", c'est-à-dire des particules dont la dimension principale (diamètre ou longueur) est typiquement inférieure au micromètre, généralement comprise dans un intervalle de l'ordre d'une dizaine de nanomètres à une centaine ou quelques centaines de nanomètres.
Ces nanoparticules se présentent sous forme de particules élémentaires (ou "particules primaires"), ces particules élémentaires ou nanoparticules pouvant former des agrégats (ou "particules secondaires") d'au moins deux de ces nanoparticules, nanoparticules et/ou agrégats pouvant éventuellement former à leur tour des agglomérats susceptibles de se désagglomérer en ces nanoparticules et/ou agrégats sous l'effet d'une force externe, par exemple sous l'action d'un travail mécanique.
Ces nanoparticules sont caractérisées au microscope électronique à transmission (MET), comme indiqué ci-après.

A) Caractérisation en émulsion (latex):

Le latex de charge PVAr, au préalable dilué à l'eau (par exemple à 8 g de charge par litre d'eau) est dilué environ 50 fois dans l'isopropanol. 40 ml de la solution ainsi obtenus sont versés dans un bécher de forme haute (50 ml), puis dispersés à l'aide d'une sonde ultrasons de 600 W (sonde Vibracells, référence 72412, commercialisée par Bioblock Scientific), sous une puissance de 100%, pendant 8 min en mode pulsé (1s ON/ 1s OFF). Une goutte de la solution ainsi obtenue est alors déposée sur une grille de microscopie en cuivre à membrane de carbone, puis observée sous MET ("CM 200" commercialisé par FEI, tension d'accélération 200 kV) équipé d'une caméra (caméra MegaView II commercialisée par Soft Imaging System) et d'un système d'analyse d'image (AnalySIS Pro A version 3.0 de Soft Imaging System).
Les conditions de réglage du MET sont optimisées de manière connue, en fonction de l'échantillon et de l'état de vieillissement du filament (typiquement, diaphragme condenseur 2 (50 $\mu$m de diamètre) - objectif 3 (40 $\mu$m de diamètre)). Le taux de grandissement du microscope est adapté pour avoir une résolution suffisante sur les nanoparticules. Par exemple, un grandissement de 65000 correspond à une résolution voisine de 0,96 nm/pixel, sur une image numérique de 1248x1024 pixels ; une telle résolution permet par exemple la définition d'une nanoparticule sphérique de 40 nm de diamètre avec plus de 1000 pixels. La calibration de la caméra est réalisée de manière conventionnelle à l'aide d'étalons (à faible grandissement, un réseau en or de 2160 lignes/mm ; à fort grandissement, des billes d'or de diamètre 0,235 nm).
Le diamètre des nanoparticules est mesuré à l'aide du logiciel AnalySIS Pro A version 3.0 (avec option "Cercle" du menu "Mesure"). Pour chaque image et pour une nanoparticule donnée, l'opérateur matérialise à l'écran (à l'aide de la souris) trois points situés en périphérie de l'image de la nanoparticule. Le logiciel trace alors automatiquement le cercle qui passe par ces trois points et stocke dans un fichier (Excel) les valeurs de l'aire circulaire, du périmètre circulaire et du diamètre circulaire de la nanoparticule. Cette opération n'étant possible que pour les nanoparticules dont les contours sont bien délimités, sont exclues de la mesure les nanoparticules présentes dans des agglomérats. L'expérience est répétée au minimum sur 2000 nanoparticules représentatives de l'échantillon (issues d'au moins 10 images différentes, typiquement 50).

B) Caractérisation en composition de caoutchouc:

Les échantillons de charge PVAr, en composition de caoutchouc vulcanisée, sont préparés de manière connue par ultracryomicrotomie (voir par exemple L. Sawyer and D. Grubb, *Polymer Microscopy,* p. 92, Chapman and Hall).
L'appareil utilisé ici est un ultracryomicrotome Leica ("EMFCS") équipé d'un couteau diamant. L'échantillon est découpé sous la forme d'une pyramide tronquée à base rectangulaire, la face tronquée à partir de laquelle seront

réalisées les coupes mesurant moins de 600 µm de côté. Cette pyramide tronquée est maintenue fermement pendant la découpe. L'échantillon est refroidi à une température adaptée (proche de la température de transition vitreuse de l'échantillon) pour qu'il soit suffisamment dur pour permettre la coupe, la température du couteau étant typiquement voisine de celle de l'échantillon. La vitesse et l'épaisseur de coupe (telles qu'affichées par l'appareillage) sont préférentiellement comprises entre 1 et 2 mm/s et entre 20 et 30 nm, respectivement. A l'aide d'une goutte de solution aqueuse de saccharose (40 g dans 40 mL d'eau), les coupes sont récupérées dans l'enceinte de l'ultracryomicrotome puis déposées sur une grille de MET, à température ambiante. Le saccharose est ensuite éliminé en déposant la grille à la surface d'un cristallisoir rempli d'eau distillée.

Les coupes sont observées sur microscope CM 200 (tension 200 kV). Pour optimiser le contraste, les observations sont réalisées en imagerie filtrée en énergie classique (fenêtre en énergie $\Delta E$ égale à environ 15 eV), avec un système d'imagerie GIF (Gatan Imaging Filter) et les logiciels associés (Filter Control et Digital Micrograph 3.4).

## II. DESCRIPTION DETAILLEE DE L'INVENTION

Dans la présente description, sauf indication expresse différente, tous les pourcentages (%) indiqués sont des % en masse.

### II-1. Nanoparticules de PVAr

Les nanoparticules de l'invention ont pour caractéristique essentielle d'être constituées d'un PVAr fonctionnalisé et réticulé, ledit PVAr étant un copolymère d'au moins :

- un comonomère "A" vinylaromatique:
- un comonomère "B" porteur d'une fonction notée Z de formule (I) :

$$\equiv Si\text{-}X,$$

  dans laquelle X représente un groupe hydroxyle ou un groupe monovalent hydrolysable ;
- un comonomère "C" réticulant au moins bifonctionnel et polymérisable par réaction d'addition, le comonomère C pouvant être vinylaromatique, identique à ou différent du comonomère A, ou non vinylaromatique.

L'homme de métier comprendra aisément à la lecture de la formule (I) ci-dessus qu'il existe au moins un et au plus trois groupe(s) X, hydroxyle ou groupe(s) monovalent(s) hydrolysable(s), relié(s) au PVAr via l'atome de silicium tétravalent.

Par "polyvinylaromatique" (PVAr), on entend dans la présente demande, par définition :

- tout homopolymère de composé vinylaromatique (soit par définition tout monomère vinylique substitué en alpha par un groupe aromatique), ou
- tout copolymère dont au moins la fraction pondérale majoritaire (de préférence au moins égale ou supérieure à 50%, plus préférentiellement égale ou supérieure à 70%) comporte des motifs vinylaromatique, la fraction minoritaire (de préférence inférieure à 50%, plus préférentiellement inférieure à 30%) pouvant être issue(s) de monomère(s) d'une autre nature.

A titre de composé vinylaromatique convient particulièrement tout composé styrénique (par définition tout monomère comportant le radical styryle) tel que par exemple styrène, 2-méthylstyrène, 3-méthylstyrène, 4-méthylstyrène, alpha-méthylstyrène, 2,4-diméthylstyrène, 2,4-diisopropylstyrène, 4-ter-butylstyrène, méthoxystyrène, ter-butoxystyrène, chlorostyrène, chlorométhylstyrène. Comme autres exemples préférentiels de composé styrénique peuvent être cités l'éthylvinylbenzène (ci-après, en abrégé "EVB") le divinylbenzène ("DVB") et leurs différents isomères.

De préférence, dans la formule (I) ci-dessus, X est un halogène, notamment le chlore, ou X répond à la formule OR dans laquelle O est l'oxygène et R représente l'hydrogène ou un groupe hydrocarboné monovalent, linéaire ou ramifié, comportant de préférence de 1 à 15 atomes de carbone.

Conviennent plus particulièrement des fonctions Z choisies parmi les fonctions dites "hydroxysilyle" (≡Si-OH) ou "alkoxysilyle" (≡Si-OR'), R' étant un radical hydrocarboné comportant de préférence de 1 à 15 atomes de carbone, plus préférentiellement choisi parmi les alkyles, alkoxyalkyles, cycloalkyles et aryles, en particulier parmi les alkyles en $C_1$-$C_8$, les alkoxyalkyles en $C_2$-$C_8$, les cycloalkyles en $C_5$-$C_{10}$ et les aryles en $C_6$-$C_{12}$.

Selon un mode de réalisation particulier préféré de l'invention, Z répond à l'une des formules ci-après :

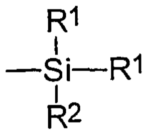 ; 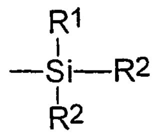 ; 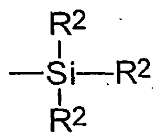 ,

dans lesquelles :

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$ ;
- les radicaux $R^2$, substitués ou non substitués, identiques ou différents entre eux, sont choisis dans le groupe constitué par l'hydroxyle, les alkoxyles en $C_1$-$C_8$ et les cycloalkoxyles en $C_5$-$C_8$.

Plus préférentiellement, dans ces relations :

- les radicaux $R^1$ sont choisis dans le groupe constitué par les alkyles en $C_1$-$C_4$, cyclohexyle et phényle, notamment parmi les alkyles en $C_1$-$C_4$, plus particulièrement parmi méthyle et éthyle ;
- les radicaux $R^2$ sont choisis dans le groupe constitué par l'hydroxyle et les alkoxyles en $C_1$-$C_6$, notamment parmi l'hydroxyle et les alkoxyles en $C_1$-$C_4$, plus particulièrement parmi hydroxyle, méthoxyle et éthoxyle.

Plus préférentiellement encore, les radicaux $R^1$ sont choisis parmi méthyle et éthyle et les radicaux $R^2$ sont choisis parmi hydroxyle, méthoxyle et éthoxyle.

De préférence, le PVAr est un homopolymère styrénique, notamment un polystyrène, ou un copolymère issu de motifs styréniques selon une fraction pondérale majoritaire (de préférence au moins égale ou supérieure à 50%, plus préférentiellement égale ou supérieure à 70%), par exemple un homopolymère styrène, un copolymère styrène-DVB, ou styrène-EVB, ou EVB-DVB, ou styrène-EVB-DVB ; la fraction minoritaire (de préférence inférieure à 50%, plus préférentiellement inférieure à 30%) dudit copolymère pouvant comporter en outre un autre comonomère.

Pour la clarté de l'exposé sont rappelées ci-dessous, et comparées à celle du styrène, les formules développées des composés styréniques EVB et DVB :

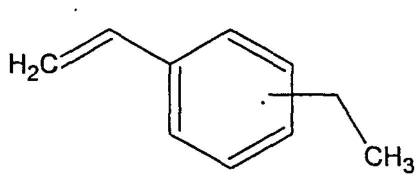

" EVB " (éthylvinylbenzène)

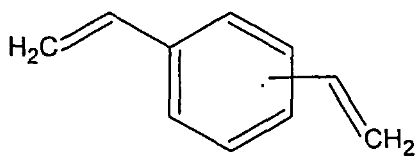

" DVB " (divinylbenzène)

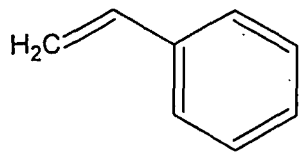

styrène

La fonctionnalisation du PVAr est ici apportée par au moins un comonomère de départ (comonomère B) porteur de la fonction Z. Le taux molaire de ce comonomère B est de préférence supérieur à 5%, notamment compris entre 5 et 30%, en particulier compris entre 5 et 20%.

Le comonomère A est de préférence un comonomère styrénique, plus préférentiellement choisi dans le groupe constitué par le styrène, l'EVB, le DVB et les mélanges de tels monomères.

Selon un premier mode de réalisation préférentiel, le comonomère B est choisi dans le groupe constitué par les acrylates et méthacrylates d'hydroxysilyl-alkyl($C_1$-$C_4$), les acrylates et méthacrylates d'alkoxy($C_1$-$C_4$)silyl-alkyl ($C_1$-$C_4$), et les mélanges de tels monomères. Plus préférentiellement, il est choisi dans le groupe constitué par les acrylates et méthacrylates d'hydroxy-, de méthoxy-, d'éthoxy-silyl-alkyl($C_1$-$C_4$), et les mélanges de tels monomères, notamment parmi les acrylates et méthacrylates d'hydroxy-, de méthoxy-, d'éthoxysilylpropyle, plus particulièrement parmi acrylate et méthacrylate de triméthoxysilylpropyle.

Selon un second mode de réalisation préférentiel, le comonomère B est choisi dans le groupe constitué par les styryl-alkyl($C_1$-$C_4$)-hydroxysilanes, les styryl-alkyl($C_1$-$C_4$)-alkoxy($C_1$-$C_4$)silanes et les mélanges de tels monomères. Plus préférentiellement, il est choisi dans le groupe constitué par les styryl-alkyl($C_1$-$C_4$)-hydroxy-, méthoxy-, éthoxy-silanes et les mélanges de tels monomères, notamment parmi les styryléthylhydroxysilanes, les styryléthylméthoxysilanes et les styryléthyléthoxysilanes ; on utilise plus particulièrement le styryléthyltriméthoxysilane (ou triméthoxysilyléthylstyrène).

Compte tenu des taux molaires préférentiels indiqués supra pour ce comonomère B porteur de la fonction Z, ce dernier est utilisé selon un taux pondéral qui est préférentiellement supérieur à 10%, plus préférentiellement compris entre 10 et 30%, notamment entre 15 et 30%.

Les comonomères du type B sont bien connus, notamment ceux choisis dans le groupe constitué par le méthacrylate de triméthoxysilylpropyle (en abrégé "MTSP"), l'acrylate de triméthoxysilylpropyle ("ATSP") et le triméthoxysilyléthylstyrène ("TSES") ou styryléthyltriméthoxysilane, de formules respectives ci-après :

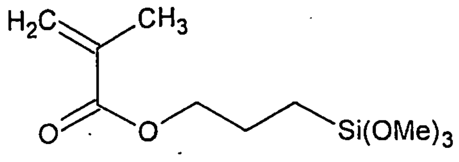

" MTSP " (méthacrylate de triméthoxysilylpropyle)

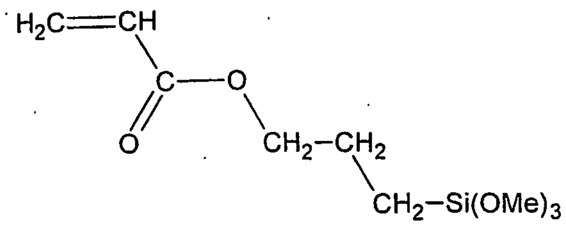

" ATSP " (acrylate de triméthoxysilylpropyle)

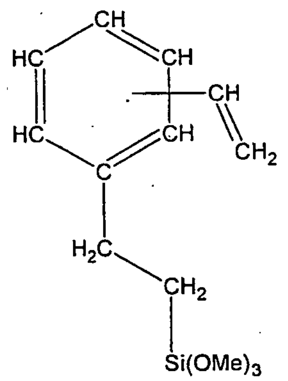

" TSES " (triméthoxysilyléthylstyrène)

Le PVAr fonctionnalisé se présente en outre dans un état réticulé, c'est-à-dire sous une forme tridimensionnelle, de manière à bien maintenir la morphologie de la charge à haute température.

Une telle réticulation est apportée par au moins un comonomère de départ (comonomère C) polymérisable par réaction d'addition et bifonctionnel, c'est-à-dire porteur d'au moins une deuxième fonction susceptible de créer un réseau tridimensionnel de PVAr lors de la polymérisation. Ce comonomère dit réticulant peut être vinylaromatique, dans ce cas identique à ou différent du comonomère A précédemment décrit, ou non vinylaromatique.

Conviennent plus préférentiellement comme comonomère C les comonomères porteurs de deux groupes insaturés, notamment éthyléniques, polymérisables par voie radicalaire, en particulier ceux choisis dans le groupe constitué par les di(méth)acrylates de polyols, notamment de diols ou de triols (par exemple d'éthylène glycol, de propylène glycol, 1,4-butanediol, 1,6-hexanediol, triméthylolpropane), les di(méth)acrylamides d'alkylène (par exemple le bis-acrylamide de méthylène), les composés vinylaromatiques, de préférence styréniques, porteurs d'au moins deux groupements vinyliques (par exemple le diisopropenylbenzène (DIB), le divinylbenzène (DVB), le trivinylbenzène (TVB)), et les mélanges de tels comonomères.

A titre de comonomère réticulant pourrait être également utilisé le comonomère B porteur de la fonction Z précitée, à la condition bien sûr que ce comonomère B soit lui-même au moins bifonctionnel et copolymérisable, de préférence par voie radicalaire, avec les autres comonomères.

Le taux pondéral de comonomère réticulant C est de préférence supérieur à 1%, plus préférentiellement supérieur à 5%, en particulier compris entre 10 et 30% notamment s'il s'agit d'un comonomère vinylaromatique, notamment styrénique.

Divers autres monomères, comme par exemple des monomères diéniques tels que butadiène, isoprène, pipérylène, peuvent être éventuellement ajoutés à titre minoritaire, de préférence pour moins de 20% en poids total de monomères.

Le PVAr fonctionnalisé Z et réticulé peut être préparé par tout procédé de synthèse adapté à la fonctionnalisation d'un copolymère vinylaromatique.

De préférence, cette synthèse est conduite par polymérisation radicalaire des différents monomères. Une telle technique est dans son principe général connue, elle a été notamment appliquée à la polymérisation radicalaire en émulsion de polystyrène fonctionnalisé Z (alkoxysilane ou hydroxysilane) en présence de MTSP (voir par exemple Macromolecules 2001, 34, 5737 et Macromolecules 2002, 35, 6185), ou à la synthèse de polystyrène réticulé (mais non fonctionnalisé) en présence de DVB (Polymer 2000, 41, 481).

Les polymères décrits dans ces publications sont destinés à des applications aussi variées que peintures, encres, fluides magnétiques, papier, biotechnologie. Aucune description ni suggestion n'est faite dans ces documents de nanoparticules de PVAr à la fois fonctionnalisé et réticulé, copolymère des trois comonomères A, B et C précités, présentant un très pouvoir renforçant puisque capables de renforcer pleinement des matrices de caoutchouc telles que celles utilisées dans les pneumatiques.

De préférence, pour la synthèse décrite ci-dessus, le comonomère A vinylaromatique est un monomère styrénique choisi dans le groupe constitué par le styrène, l'EVB, le DVB et les mélanges de ces monomères ; le comonomère B fonctionnalisant est choisi préférentiellement dans le groupe constitué par MTSP, ATSP, TSES et les mélanges de ces monomères ; le comonomère C réticulant est lui-même un composé styrénique choisi de préférence dans le groupe constitué par le DIB, le DVB, le TVB et les mélanges de ces monomères.

Peuvent être ainsi obtenues des nanoparticules de PVAr fonctionnalisé Z et réticulé, en émulsion dans l'eau

c'est-à-dire sous forme de latex (typiquement, par exemple, 100 g de polymère par litre d'eau). On rappelle que par "latex" de polymère, doit être entendu de manière connue un système de colloïde composé d'une suspension ou d'une émulsion de particules de polymère dans un milieu aqueux.

Comme reproduit à la Figure 1, ces nanoparticules de PVAr caractérisées par MET conformément au paragraphe I-1-A précédent, se présentent de préférence sous une forme sensiblement sphérique (donc sous forme de nanobilles), soit à l'état isolé soit en agrégats eux-mêmes éventuellement agglomérés. Le nombre de nanoparticules par agrégat est typiquement compris entre 2 et 100.

Le diamètre moyen de ces nanobilles, mesurable par MET comme indiqué au paragraphe I-1-A, est compris entre 10 et 60 nm, notamment entre 10 et 40 nm.

Les nanoparticules de PVAr conformes à l'invention précédemment décrites sont avantageusement utilisables pour le renforcement de matrices polymériques, le polymère de ces matrices pouvant être de toute nature, par exemple une matière thermoplastique, une matière thermodurcissable, un élastomère diénique ou non diénique.

Dans ces matrices polymériques, le taux de nanoparticules de PVAr est de préférence compris entre 10 et 100 parties en poids pour cent parties de polymère. Grâce à la faible densité de ces nanoparticules, ce taux est avantageusement compris entre 10 et 80 parties, plus préférentiellement encore compris entre 20 et 50 parties en poids de polymère.

De préférence, la charge PVAr constitue en outre plus de 80%, plus préférentiellement plus de 90% (% en volume) de la totalité de la charge renforçante, une fraction minoritaire (de préférence moins de 20%, plus préférentiellement moins de 10% en volume) de cette totalité pouvant être constituée par une autre charge renforçante, par exemple une charge inorganique ou du noir de carbone.

Les nanoparticules de PVAr peuvent avantageusement constituer la totalité de la charge renforçante.

<u>II-2. Masterbatch de nanoparticules de PVAr</u>

Les nanoparticules de PVAr précédemment décrites peuvent être incorporées à leur matrice de polymère par l'intermédiaire d'un masterbatch, c'est-à-dire que ces particules sont préalablement mélangées avec au moins un polymère pour faciliter leur incorporation ultérieure à la matrice polymérique finale.

Par "masterbatch" (ou "mélange-maître") doit être entendu de manière connue le mélange d'au moins un polymère (par exemple un élastomère) et une charge renforçante, mélange précurseur de la matrice de polymère finale, prête à l'emploi.

Ce masterbatch, comportant au moins les nanoparticules selon l'invention et un polymère, par exemple un élastomère ou mélange d'élastomères, constitue un autre objet de la présente invention.

Ce masterbatch est susceptible d'être préparé par un procédé lui-même objet de l'invention, un tel procédé comportant les étapes suivantes :

- partir d'un latex du polymère et d'un latex du PVAr fonctionnalisé et réticulé ;
- les mélanger intimement ;
- faire précipiter le mélange ainsi obtenu ;
- puis laver et sécher le précipité ainsi obtenu.

Le latex de polymère peut consister en un polymère déjà disponible en émulsion ou par exemple en un polymère initialement en solution qui est émulsifié dans un mélange de solvant organique et d'eau, généralement au moyen d'un agent tensio-actif (le solvant organique disparaissant au moment de la coagulation ou précipitation).

L'opération de mélangeage intime des deux latex est conduite de manière à bien disperser les nanoparticules de PVAr dans le polymère, homogénéiser l'ensemble pour former un mélange de latex de concentration en matière solide préférentiellement comprise entre 20 et 500 g/l, plus préférentiellement entre 50 et 350 g/l. De préférence, les deux latex de départ sont dilués à l'eau avant mélangeage (par exemple 1 volume d'eau pour 1 volume de latex).

La précipitation du mélange des deux latex peut être réalisée par tout procédé connu de l'homme du métier, par exemple par une action mécanique ou préférentiellement par l'action d'un agent coagulant.

L'agent coagulant est tout composé liquide, miscible à l'eau mais non solvant (ou mauvais solvant) du polymère, par exemple une solution aqueuse saline, de préférence un alcool ou un mélange de solvants comportant au moins un alcool (par exemple alcool et eau, alcool et toluène). Plus préférentiellement, l'agent coagulant est un alcool seul tel que méthanol ou isopropanol.

La coagulation est conduite préférentiellement sous agitation, à température ambiante, dans un grand volume de coagulant ; typiquement, on utilise sensiblement le même volume d'alcool que le volume total des deux latex dilués. Au cours de cette étape, on préfère verser le mélange des deux latex sur le coagulant, et non l'inverse.

Après lavage et séchage est obtenu le masterbatch se présentant sous forme de "miettes" (*"crumbs"*) de polymère, comportant au moins le polymère choisi et les nanoparticules de PVAr noyées dans la matrice de polymère.

Peuvent être éventuellement incorporés au masterbatch divers additifs, qu'ils soient destinés au masterbatch proprement dit (par exemple un agent de stabilisation, du noir de carbone à titre d'agent colorant et anti-UV, un plastifiant, un antioxydant, etc.) ou à la matrice de polymère finale à laquelle est destiné le masterbatch.

Le polymère du masterbatch peut être tout polymère, identique ou non à celui (ou ceux) de la matrice de polymère finale. Il peut être avantageux d'utiliser le même polymère et d'ajuster le taux de PVAr dans le masterbatch au taux visé final, de manière à ne pas avoir à ajouter de polymère ultérieurement, au cours de la fabrication de la composition polymérique finale comportant les nanoparticules de l'invention et le polymère ainsi renforcé.

II-3. Utilisation des nanoparticules de PVAr comme charge renforçante de pneumatique

Les nanoparticules selon l'invention précédemment décrites sont utilisées préférentiellement pour le renforcement de pneumatiques ou de produits semi-finis pour pneumatiques, ces produits semi-finis étant notamment choisis dans le groupe constitué par les bandes de roulement, les sous-couches destinées par exemple à être placées sous ces bandes de roulement, les nappes d'armature de sommet, les flancs, les nappes d'armature de carcasse, les talons, les protecteurs, les chambres à air, les gommes intérieures étanches pour pneu sans chambre, les gommes internes de renforcement de flancs et autres gommes destinées à supporter la charge en cas de roulage à plat des pneumatiques.

Pour la fabrication de tels produits semi-finis, on utilise des compositions de caoutchouc à base d'au moins un (c'est-à-dire au moins un) élastomère diénique, une (au moins une) charge PVAr selon l'invention et un (au moins un) agent de couplage assurant la liaison entre cette charge PVAr et cet élastomère diénique.

Par l'expression "à base de", il faut entendre une composition comportant le mélange et/ou le produit de réaction des différents constituants de base utilisés, certains de ces constituants pouvant réagir et/ou étant destinés à réagir entre eux, au moins partiellement, lors des différentes phases de fabrication de la composition, ou lors de sa cuisson ultérieure.

Par élastomère ou caoutchouc (les deux termes étant synonymes) du type "diénique", on entend de manière connue un élastomère issu au moins en partie (i.e. un homopolymère ou un copolymère) de monomères diènes (monomères porteurs de deux doubles liaisons carbone-carbone, conjuguées ou non). L'élastomère diénique est choisi préférentiellement dans le groupe des élastomères diéniques fortement insaturés constitué par les polybutadiènes (en abrégé BR), les polyisoprènes (IR), le caoutchouc naturel (NR), les copolymères de butadiène, les copolymères d'isoprène et les mélanges de ces élastomères.

Selon un mode de réalisation particulier, l'élastomère diénique est majoritairement, c'est-à-dire pour plus de 50 pce, un SBR, qu'il s'agisse d'un SBR préparé en émulsion ("E-SBR") ou d'un SBR préparé en solution ("S-SBR"), ou un coupage (mélange) SBR/BR, SBR/NR (ou SBR/IR), ou encore BR/NR (ou BR/IR).

Selon un autre mode de réalisation particulier, l'élastomère diénique est majoritairement (pour plus de 50 pce) un élastomère isoprénique, c'est-à-dire un homopolymère ou un copolymère d'isoprène choisi dans le groupe constitué par le caoutchouc naturel (NR), les polyisoprènes de synthèse (IR), les différents copolymères d'isoprène et les mélanges de ces élastomères. Cet élastomère isoprénique est de préférence du caoutchouc naturel ou un polyisoprène cis-1,4 de synthèse ayant un taux de liaisons cis-1,4 supérieur à 90%, plus préférentiellement encore supérieur à 98% (% molaire).

Selon un autre mode de réalisation particulier, notamment lorsque la charge PVAr est destinée à renforcer un flanc de pneumatique, une gomme intérieure étanche de pneumatique sans chambre (ou autre élément imperméable à l'air), la composition de caoutchouc peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

L'agent de couplage (ou agent de liaison) est destiné à établir une connexion suffisante entre la surface des particules de PVAr et le polymère auquel ces particules sont destinées, afin que ces dernières puissent assurer pleinement leur fonction de charge renforçante.

Les agents de couplage sont bien connus de l'homme du métier et ont été décrits dans un très grand nombre de documents. On peut utiliser tout agent de couplage susceptible d'assurer efficacement, dans une composition de caoutchouc diénique utilisable pour la fabrication de pneumatiques, la liaison entre une charge inorganique renforçante telle qu'une silice et un élastomère diénique, en particulier des organosilanes ou des polyorganosiloxanes polyfonctionnels.

A titre d'exemples d'organosilanes, on peut citer les polysulfures de bis-(alkoxyl($C_1$-$C_4$)silyl-alkyl($C_1$-$C_4$)), comme par exemple les polysulfures de bis(3-triméthoxysilylpropyl) ou de bis(3-triéthoxysilylpropyl), notamment le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également comme exemples d'agents de couplage avantageux les polysulfures de bis-(monoalkoxyl($C_1$-$C_4$)-dialkyl($C_1$-$C_4$)silylpropyl), plus particulièrement le tétrasulfure ou disulfure de bis-monoéthoxy-diméthylsilylpropyl. A titre d'exemples d'agents de couplage autres que les

alkoxysilanes polysulfurés précités, on citera notamment des polyorganosiloxanes bifonctionnels ou encore des polysulfures d'hydroxysilane.

Le taux d'agent de couplage est de préférence inférieur à 10 pce, plus préférentiellement inférieur à 7 pce, en particulier inférieur à 5 pce.

Bien entendu, les compositions de caoutchouc ci-dessus comportent également tout ou partie des additifs usuels habituellement utilisés dans les compositions d'élastomères destinées à la fabrication de pneumatiques, comme par exemple des plastifiants ou des huiles d'extension, des pigments, des agents de protection tels que cires anti-ozone, anti-ozonants chimiques, des agents anti-oxydants, des agents anti-fatigue, des résines renforçantes ou plastifiantes, des accepteurs ou des donneurs de méthylène, des activateurs de couplage, des agents de recouvrement, des agents facilitant la processabilité, un système de réticulation à base soit de soufre, soit de donneurs de soufre et/ou de peroxyde et/ou de bismaléimides, des accélérateurs de vulcanisation, des activateurs de vulcanisation.

## III. EXEMPLES DE REALISATION

### III-1. Essai 1

Dans les exemples de réalisation qui suivent, la charge de PVAr fonctionnalisé (Z) et réticulé est synthétisée par polymérisation radicalaire de 4 monomères différents - styrène, EVB, DVB et MTSP - puis incorporée à une composition de caoutchouc pour pneumatique sous la forme d'un masterbatch obtenu par coprécipitation d'un latex de la charge PVAr et d'un latex d'un élastomère diénique (SBR).

Selon un mode de réalisation particulièrement préféré, le taux pondéral de comonomère B porteur de la fonction Z (ici, MTSP) est compris entre 20 et 30%, celui du comonomère C réticulant (ici DVB) est compris entre 10% et 30%, la fraction pondérale totale des motifs styréniques (soit dans le cas présent styrène, EVB et DVB) étant supérieure à 70%.

### III-1-A. Synthèse des nanoparticules de PVAr

La polymérisation radicalaire en émulsion est réalisée en milieu tamponné à pH égal à 7, avec introduction simultanée dans un réacteur du styrène, du MTSP (produit Aldrich), et d'un mélange de DVB et EVB (produit DVB de Fluka comportant en fait 50% de DVB et 50% d'isomères de l'EVB) ; ledit mélange a été préalablement lavé 3 fois par une solution aqueuse de soude 1M (3x165 ml pour 200 ml de mélange DVB), puis lavé à l'eau jusqu'à pH neutre.

Les différents monomères sont préalablement soumis à un barbotage d'azote, ainsi que les solutions aqueuses utilisées à l'exception de la solution de SDS (barbotage à l'état de poudre). La réaction est menée dans un réacteur de 1,5 litres muni d'une agitation mécanique et d'un réfrigérant. Après introduction de 845 ml d'eau et un barbotage à l'azote de 30 min sous agitation, sont introduits successivement 50 ml d'une solution aqueuse de dodécylsulfate de sodium (SDS) à 0,9 mol/l à titre d'agent tensioactif, 50 ml à 1 mol/l d'une solution tampon équimolaire d'hydrogéno-phosphate de sodium et de dihydrogénophosphate d'ammonium. A cette solution tamponnée à pH 7, agitée lentement à 150 tr/min et chauffée à 60°C, est ajoutée la charge monomères composée de 36,4 g de styrène (soit une fraction pondérale de 37%), 24,8 g de MTSP (fraction pondérale de 25%), 18,7 g de DVB (fraction pondérale de 19%) et 18,7 g de EVB (fraction pondérale de 19%) (total 98,6 g de monomères).

Sous forte agitation (350 tr/min) sont alors ajoutés à l'émulsion résultante 36 ml d'une solution aqueuse de persulfate de potassium (0,125 mol/l). Après 2h 45min à 60°C sous agitation, 18 ml d'une solution aqueuse d'hydroquinone (0,5 mol/l) sont ajoutés au milieu de polymérisation. Le milieu réactionnel est refroidi avant mélange avec l'élastomère (conversion mesurée par extrait sec de 95%).

Le PVAr fonctionnalisé et réticulé ainsi obtenu se présente sous la forme d'un latex comportant environ 10% en poids de solide (PVAr) et le complément (environ 90%) en eau.

La caractérisation du latex de charge est réalisée conformément au paragraphe I-1-A. Le cliché MET reproduit à la Figure 1 montre que les nanoparticules (particules élémentaires) de l'invention se présentent ici sous forme de nanobilles qui ont en majorité un diamètre compris entre 20 et 60 nm. Le diamètre circulaire moyen est égal à 30 nm (écart-type 6 nm).

A ce stade, le PVAr est isolé et séché pour évaluation de son taux de fonctionnalisation (Z) apporté par le monomère MTSP, par dosage du taux de silicium, en procédant comme suit :

- une première étape de solubilisation de l'échantillon en milieu aqueux par calcination puis par fusion alcaline des cendres obtenues ;
- une seconde étape de dosage quantitatif du silicium par spectrométrie d'émission atomique par plasma induit (ICP/AES).

Plus précisément, on opère de la manière suivante : l'échantillon est calciné à 525°C durant 2 heures. La fusion

est ensuite conduite sur les cendres obtenues, à 1150°C (± 50°C) avec du tétraborate de lithium (par exemple 2 g pour 1 g de charge calcinée), pendant environ 25 min. Après refroidissement, la totalité de la perle de fusion obtenue est solubilisée à 80°C dans de l'acide chlorhydrique dilué à 2% dans l'eau. La solution est ensuite transférée et ajustée en fiole jaugée.

Le dosage du silicium est alors réalisé, sur le contenu de la fiole jaugée, par ICP/AES : la solution aqueuse est envoyée dans un plasma d'argon via un système d'introduction, où elle subit les phases de désolvatation, d'atomisation puis d'excitation/ionisation des atomes présents. La raie d'émission du silicium à 251,611 nm est ensuite sélectionnée par le biais d'un monochromateur, puis quantifiée par rapport à une courbe d'étalonnage préparée à partir d'une solution étalon certifiée de l'élément correspondant (l'intensité I de la raie émise étant proportionnelle à la concentration C de l'élément correspondant).

Le résultat est exprimé en % massique de Silicium rapporté à l'échantillon sec (préalablement séché à 105°C durant 2 heures), selon la formule :

$$\% \text{ Si} = \text{C.V.} (100 / \text{M})$$

dans laquelle :

- C = concentration en Si exprimée en mg/L ;
- V = volume de la fiole jaugée en L ;
- M = masse de l'échantillon en mg.

La valeur mesurée est comparée à celle d'un témoin poly(styrène-DVB-EVB) synthétisé de manière identique mais sans MTSP.

Les résultats ci-dessous démontrent clairement que le Silicium présent dans les nanoparticules de PVAr est bien dû à la fonctionnalisation du PVAr apportée par le monomère MTSP :

| Taux de Si (± 0.2%) | sans MTSP | avec MTSP |
|---|---|---|
| Dosé (%) | non détecté | 2.9% |

La poudre résultante est également analysée par RMN du $^{29}$Si (CPMAS, spectromètre AV 200 MHz, vitesse de rotation 4 kHz) ; l'analyse révèle un massif majoritaire entre -41 et -38 ppm, caractéristique d'un silicium du type Si-X tel que décrit précédemment.

La densité des nanoparticules est mesurée sur la poudre, à l'aide d'un pycnomètre à hélium : la valeur obtenue est égale à 1,1 g/cm$^3$.

<u>III-1-B. Préparation du masterbatch</u>

Le latex de PVAr est ensuite incorporé directement à un élastomère diénique SBR pour obtention d'un masterbatch comme indiqué au paragraphe II-2 précédent. Le taux de charge PVAr visé dans le masterbatch, comme dans la composition de caoutchouc visée finale, est de 39 pce (parties en poids pour cent parties d'élastomère).

Le latex de SBR est préparé de manière connue de l'homme de l'art, dans les conditions suivantes : température de polymérisation : 5°C ; tensioactif : dodécylsulfate de sodium ; amorceur : système redox sel de fer II/hydroperoxyde. La conversion est de l'ordre de 50 à 60%. Le SBR ainsi fabriqué présente les caractéristiques suivantes : viscosité inhérente à 0,1. g/dl dans le toluène à 25°C : 3,11 ; viscosité Mooney (MS) égale à 67 ; Tg (DSC) = -52°C ; microstructure : styrène 23,6%, phase butadiène : vinyl 15,0%, trans 70.1%, cis 14.9%.

La quantité de matière sèche du latex de SBR est déterminée par pesée, sur extrait sec, avant de préparer le masterbatch. Le latex de SBR est dilué 3 fois à l'eau, soit 734 ml de latex de SBR à 216,6 g/l (159 g de SBR) et 1468 ml d'eau de dilution.

Dès sa synthèse terminée, le latex de charge PVAr est refroidi à température ambiante puis ajouté au latex de SBR dilué à raison de 39 pce de charge, soit 743 ml de latex de charge PVAr à 83,4 g/l (62 g de charge). Le mélange résultant est homogénéisé doucement. A raison de 100 ml/min, le mélange est alors ajouté sur 6000 ml de méthanol agité à 350 tr/min. Le précipité ainsi obtenu est filtré sur papier filtre, rincé avec de l'eau jusqu'à faible moussage résiduel constant des eaux de lavage et test négatif des eaux de lavage au nitrate d'argent. Le précipité ainsi lavé est séché

sous pression réduite sous azote à 60°C pendant 3 à 4 jours. 212 g de masterbatch sec sont ainsi récupérés;

III-1-C. Préparation des compositions de caoutchouc

Une composition témoin (charge silice HDS) est préparée de manière conventionnelle, comme suit : dans un mélangeur interne, dont la température initiale de cuve est d'environ 90°C, on introduit tout d'abord ("phase non-productive") l'élastomère SBR préalablement étendu avec 37,5 pce d'huile aromatique, ainsi qu'une partie de la charge. Après un temps approprié de malaxage, de l'ordre de 1 min, on ajoute l'agent de couplage et la partie restante de charge. Les autres ingrédients, à l'exception du système de vulcanisation, sont ajoutés au bout de 2 min. Le mélangeur interne est alors rempli à 75%. On conduit alors un travail thermomécanique d'une durée de 6 min environ, avec une vitesse moyenne des palettes de 70 tours/min, jusqu'à obtenir une température de tombée d'environ 135°C.

On procède de manière identique pour une seconde composition incorporant cette fois la charge PVAr conforme à l'invention, à la différence près que la charge PVAr et l'élastomère diénique sont introduits en une seule fois dès le début, sous forme du masterbatch précédemment préparé comportant 39 pce de particules de PVAr ; puis l'huile d'extension est incorporée de manière progressive.

Après le travail thermomécanique de malaxage, on récupère le mélange obtenu, on le refroidit puis on ajoute le système de vulcanisation (soufre et accélérateur primaire type sulfénamide) sur un mélangeur externe à 30°C, en mélangeant le tout ("phase productive") pendant un temps approprié (entre 5 et 12 min).

Les compositions ainsi obtenues sont ensuite soit calandrées sous la forme de plaques (épaisseur de 2 à 3 mm) de caoutchouc pour la mesure de leurs propriétés mécaniques, soit extrudées sous la forme d'un produit semi-fini pour pneumatique, par exemple une bande de roulement. La vulcanisation (cuisson) est effectuée à 150°C pendant 40 min, sous pression.

Le cliché de MET (réalisé selon paragraphe I-1-B) représenté à la Figure 2 est celui réalisé sur la composition comportant les nanoparticules de l'invention ; il montre que la charge PVAr se présente sous forme de particules élémentaires sphériques (nanobilles), assemblées en agrégats dispersés de manière homogène dans la phase élastomérique.

III-1-D. Caractérisation des compositions de caoutchouc

Les compositions de caoutchouc sont caractérisées, avant et après cuisson, comme indiqué ci-après.

Essais de traction :

Ces essais permettent de déterminer les contraintes d'élasticité et les propriétés à la rupture après cuisson. Sauf indication différente, ils sont effectués conformément à la norme française NF T 46-002 de septembre 1988. On mesure en première élongation (i.e., sans cycle d'accommodation) les modules sécants vrais (i.e., calculés en se ramenant à la section réelle de l'éprouvette), exprimés en MPa, à 100% d'allongement (modules notés M100), à 300% d'allongement (M300), 400% d'allongement (M400) voire à 600% d'allongement (M600).

On mesure également les contraintes (en MPa) et les allongements à la rupture (en %). Toutes ces mesures de traction sont effectuées dans les conditions normales de température et d'hygrométrie (23 $\pm$ 2°C ; 50 $\pm$ 5% d'humidité relative).

Un traitement des enregistrements de traction permet également de tracer la courbe de module en fonction de l'allongement (voir Fig. 3 à Fig. 5 annexées), le module utilisé ici étant le module sécant vrai mesuré en première élongation.

Rhéométrie :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983). Ti (en min) est le délai d'induction, c'est-à-dire le temps nécessaire au début de la réaction de vulcanisation. On mesure également la constante de vitesse de conversion K (en $min^{-1}$) d'ordre 1, calculée entre 30% et 80% de conversion, qui permet d'apprécier la cinétique de vulcanisation (plus K est élevée, plus la cinétique est rapide).

Propriétés dynamiques :

Les propriétés dynamiques $\Delta G^*$ et $\tan(\delta)_{max}$ sont mesurées sur un viscoanalyseur (Metravib VA4000), selon la norme ASTM D 5992-96. On enregistre la réponse d'un échantillon de composition vulcanisée (éprouvette cylindrique

de 2 mm d'épaisseur et de 79 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation crête-crête de 0,1 à 50% (cycle aller), puis de 50% à 0,1% (cycle retour). Les résultats exploités sont le module complexe de cisaillement dynamique (G*) et le facteur de perte tan $\delta$. Pour le cycle retour, on indique la valeur maximale de tan $\delta$ observée ($\tan(\delta)_{max}$), ainsi que l'écart de module complexe ($\Delta G^*$) entre les valeurs à 0,1 et 50% de déformation (effet Payne).

III-1-E. Résultats des tests comparatifs de caoutchouterie

Le but de l'Essai 1 est de comparer les performances des nanoparticules de l'invention à celles de la charge inorganique conventionnelle (silice HDS).

On compare pour cela deux compositions (préparées selon paragraphe III-1-C qui précède) dont la formulation générale est conventionnelle pour des bandes de roulement de pneumatiques à hautes performances, combinant faible résistance au roulement et résistance élevée à l'usure (pneus tourisme à faible consommation d'énergie dits "Pneus Verts"). La silice HDS choisie pour renforcer la composition témoin est une silice de grade pneumatique présentant de manière connue un très haut pouvoir renforçant ("Zeosil" type "1165MP" de la société Rhodia - densité d'environ 2,1 $g/cm^3$).

Pour la composition témoin, l'élastomère diénique utilisé est le SBR dont la synthèse est décrite au paragraphe III-2, préalablement étendu avec 37,5% d'huile aromatique (soit 37,5 pce d'huile pour 100 pce de SBR sec).

Les deux compositions testées sont strictement identiques à la nature de la charge renforçante près :

- composition C-1 : silice HDS (témoin) ;
- composition C-2 : PVAr fonctionnalisé MTSP (invention).

Le taux de charge renforçante a été ajusté à iso-fraction volumique de charge (même volume - soit environ 19% - de charge dans chaque composition). La surface spécifique de la charge polymère étant plus faible, la quantité d'agent de couplage TESPT introduit dans la composition C-2 est donc plus faible.

Dans la composition C-2 (invention), les nanoparticules de PVAr représentent environ 97% (en volume) de la totalité de la charge renforçante, cette dernière comportant une faible proportion (2 pce) de noir de carbone.

Les tableaux 1 et 2 donnent successivement la formulation des différentes compositions (tableau 1 - taux des différents produits exprimés en pce), leurs propriétés avant et après cuisson à 150°C pendant 40 min (tableau 2). La Figure 3 reproduit les courbes de module sécant vrai (en MPa) en fonction de l'allongement (en %) ; ces courbes sont notées C1 et C2 et correspondent respectivement aux compositions de caoutchouc C-1 et C-2.

L'examen des différents résultats du tableau 2 montre, pour la composition renforcée des nanoparticules selon l'invention comparée à la composition témoin C-1 :

- à l'état cru, une sécurité au grillage (Ti) et une cinétique de vulcanisation (constante K) légèrement améliorées ;
- une réduction très sensible de la masse volumique (mesurée à l'aide d'un pycnomètre à hélium), d'environ 16% par rapport à la composition témoin (différence bien sûr maintenue après cuisson) ;
- après cuisson, des valeurs plus élevées de module sous forte déformation (M300, M400), indicateur clair pour l'homme du métier d'un niveau de renforcement très élevé, au moins égal à celui apporté par la silice HDS de référence ;
- enfin, ce qui n'est pas le moindre, des propriétés d'hystérèse qui, de manière inattendue, sont très sensiblement améliorées comme illustré par une forte diminution des valeurs de $\tan(\delta)_{max}$ et de $\Delta G^*$, ce qui est un indicateur reconnu d'une résistance au roulement et d'un échauffement réduits.

La Figure 3 annexée confirme bien les résultats ci-dessus : on note que la courbe C2 est située nettement au-dessus de la courbe C1, l'écart s'accentuant notamment lorsque l'allongement augmente ; ceci illustre un haut niveau de renforcement, au moins égal à celui offert par la silice HDS, en d'autres termes une haute qualité de la liaison ou couplage entre le PVAr fonctionnalisé et l'élastomère diénique.

III-2. Essai 2

Dans les exemples de réalisation qui suivent, trois charges polymère (notées respectivement charge A, charge B et charge C) de PVAr fonctionnalisé et réticulé sont synthétisées par polymérisation radicalaire de 4 monomères différents :

- charge A : styrène, EVB, DVB et MTSP (méthacrylate de triméthoxysilyl propyle) ;

- charge B : styrène, EVB, DVB et TSES (styryléthyl-triméthoxysilane) ;
- charge C : styrène, EVB, DVB et HEMA (méthacrylate d'hydroxyéthyle).

Seules les charges A et B sont donc porteuses d'une fonction Z de formule ≡ Si - X (X représentant un groupe hydroxyle ou hydrolysable) et sont donc conformes à l'invention.

On rappelle que le méthacrylate d'hydroxyéthyle (HEMA) répond à la formule suivante :

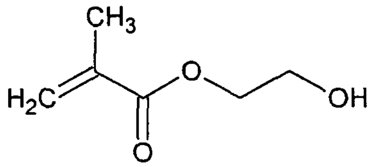

Ce monomère a été notamment utilisé comme comonomère fonctionnalisant dans la synthèse de certaines charges polymère, comme décrit par exemple dans les documents brevet EP-A-1 063 259 ou US-B-6 399 706.

Comme précédemment dans l'Essai 1, pour être testées et comparées, ces trois charges sont ensuite incorporées à des compositions de caoutchouc sous la forme d'un masterbatch obtenu par coprécipitation d'un latex de la charge PVAr et d'un latex d'un élastomère diénique (SBR).

III-2-A. Synthèse des charges PVAr

La polymérisation radicalaire en émulsion est réalisée en milieu tamponné à pH égal à 7, avec introduction simultanée dans un réacteur du styrène, selon la fonctionnalisation visée du MTSP (charge A), du TSES (charge B) ou du HEMA (charge C), et d'un mélange de DVB et EVB (produit DVB de Fluka comportant en fait 50% de DVB et 50% d'isomères de l'EVB) ; ledit mélange a été préalablement lavé 3 fois par une solution aqueuse de soude 1M (3x165 ml pour 200 ml de mélange DVB), puis lavé à l'eau jusqu'à pH neutre.

Les différents monomères sont préalablement soumis à un barbotage d'azote, ainsi que les solutions aqueuses utilisées à l'exception de la solution de SDS (barbotage à l'état de poudre). L'HEMA est distillé auparavant. La réaction est menée dans un réacteur de 1,5 litres muni d'une agitation mécanique et d'un réfrigérant. Après introduction de 845 ml d'eau, respectivement 773 ml dans le cas du TSES, et un barbotage à l'azote de 30 min sous agitation, sont introduits successivement 50 ml d'une solution aqueuse de SDS à 0,9 mol/l, 50 ml à 1 mol/l d'une solution tampon équimolaire d'hydrogéno-phosphate de sodium et de dihydrogénophosphate d'ammonium.

A cette solution tamponnée à pH 7, agitée lentement à 150 tr/min et chauffée à 60°C, est ajoutée la charge monomères comme suit :

- charge A : constituée de 36,4 g de styrène (soit une fraction pondérale de 37%), 24,8 g de MTSP (fraction pondérale de 25%), 18,7 g de DVB (fraction pondérale de 19%) et 18,7 g de EVB (fraction pondérale de 19%) (total 98,6 g de monomères) ;
- charge B : constituée de 36,4 g de styrène (soit une fraction pondérale de 36%), 26,9 g de TSES (fraction pondérale de 26,7%), 18,7 g de DVB (fraction pondérale de 18,6%) et 18,7 g de EVB (fraction pondérale de 18,6%) (total 100,7 g de monomères) ;
- charge C : constituée de 36,4 g de styrène (soit une fraction pondérale de 42%), 13,1 g de HEMA (fraction pondérale de 15,1 %), 18,7 g de DVB (fraction pondérale de 21,5%) et 18,7 g de EVB (fraction pondérale de 21,5%) (total 86,9 g de monomères).

Sous forte agitation (350 tr/min) sont alors ajoutés à l'émulsion résultante 36 ml d'une solution aqueuse de persulfate de potassium (0,125 mol/l). Le TSES étant stabilisé avec le TBC (4-tert butylcatéchol), la quantité de solution introduite pour ce dernier est de 108 ml. Après 2h 45min à 60°C sous agitation, 18 ml d'une solution aqueuse d'hydroquinone (0,5 mol/l) sont ajoutés au milieu de polymérisation. Le milieu réactionnel est refroidi avant mélange avec l'élastomère (conversion mesurée par extrait sec de 95%).

Les charges de PVAr fonctionnalisé et réticulé ainsi obtenues se présentent sous la forme d'un latex comportant environ 10% en poids de polymère et le complément (environ 90%) en eau. Le dosage du taux de silicium sur les charges A et B, conduit comme indiqué précédemment à l'Essai 1, confirme bien la fonctionnalisation apportée par les monomères MTSP et TSES (taux de silicium d'environ 2,7 à 2,9%) ; pour ces charges A et B, l'analyse par RMN confirme bien la présence d'un massif majoritaire entre -41 ppm et -38 ppm, caractéristique d'un silicium du type Si-X.

III-2-B. Préparation des masterbatch

Dès leur synthèse terminée, les latex de charge sont refroidis à température ambiante puis ajoutés chaque fois au latex de SBR (dilué à 216,6 g/l) préparé comme indiqué précédemment à l'Essai 1 (paragraphe III-1-B), pour obtention d'un masterbatch. Comme précédemment, le taux de charge PVAr visé dans le masterbatch, comme dans la composition de caoutchouc finale, est de 39 pce.

III-2-C. Préparation des compositions de caoutchouc

Dans un mélangeur interne, dont la température initiale de cuve est d'environ 90°C, on introduit tout d'abord en une seule fois ("phase non-productive") la charge polymère et l'élastomère diénique sous forme du masterbatch précédemment préparé comportant 39 pce de particules de PVAr. Après un temps approprié de malaxage, de l'ordre de 1 min, on ajoute l'agent de couplage puis l'huile d'extension est incorporée de manière progressive. Les autres ingrédients, à l'exception du système de vulcanisation, sont ajoutés au bout de 2 min. Le mélangeur interne est alors rempli à 75%. On conduit alors un travail thermomécanique d'une durée de 6 min environ, avec une vitesse moyenne des palettes de 70 tours/min, jusqu'à obtenir une température de tombée d'environ 135°C.

Après le travail thermomécanique de malaxage, on récupère le mélange obtenu, on le refroidit puis on ajoute le système de vulcanisation (soufre et accélérateur primaire type sulfénamide) sur un mélangeur externe à 30°C, en mélangeant le tout ("phase productive") pendant un temps approprié (entre 5 et 12 min). Les compositions ainsi obtenues sont ensuite soit calandrées sous la forme de plaques (épaisseur de 2 à 3 mm) de caoutchouc pour la mesure de leurs propriétés mécaniques, soit extrudées sous la forme d'un produit semi-fini pour pneumatique, par exemple une bande de roulement. La vulcanisation (cuisson) est effectuée à 150°C pendant 40 min, sous pression.

III-2-D. Test comparatif de caoutchouterie

Le but de cet essai est de comparer, en composition de caoutchouc, les performances des nanoparticules de l'invention (charges A et B) à celles de la charge polymère témoin (charge C). Trois compositions (respectivement notées C-3, C-4 et C-5) incorporant les charges A, B et C sont préparées selon le paragraphe III-2-C précédent. Ces trois compositions sont par exemple destinées à des bandes de roulement de pneumatiques.

Les tableaux 3 et 4 donnent successivement la formulation des différentes compositions (tableau 3 - taux des différents produits exprimés en pce), leurs propriétés avant et après cuisson à 150°C pendant 40 min (tableau 4). Dans les trois compositions, la charge PVAr fonctionnalisé représente environ 97% (% en volume) de la totalité de la charge renforçante, cette dernière comportant en outre une très faible proportion (2 pce) de noir de carbone. La Figure 4 reproduit les courbes de module sécant vrai (en MPa) en fonction de l'allongement (en %) ; ces courbes sont notées C3, C4 et C5 et correspondent respectivement aux compositions de caoutchouc C-3, C-4 et C-5.

L'examen des résultats du tableau 4 montre pour les deux compositions C-3 et C-4 renforcées des nanoparticules conformes à l'invention, comparée à la composition C-5 utilisant la charge témoin :

- une masse volumique identique ;
- après cuisson, des valeurs de module sous forte déformation (M100 et M300) nettement plus élevées, indicateur clair d'un niveau de renforcement supérieur apporté par les charges A et B ; la Figure 4 annexée confirme bien les résultats ci-dessus, les courbes C3 et C4 étant situées nettement au-dessus de la courbe C5, avec un écart s'accentuant lorsque l'allongement augmente ;
- enfin et surtout des valeurs d'hystérèse (illustrées par $\tan(\delta)_{max}$ et de $\Delta G^*$) qui sont maintenues au niveau remarquablement bas de la composition C-1 précédente, très en deça des valeurs observées sur la composition C-5, ce qui laisse présager une résistance au roulement et un échauffement très nettement réduits grâce à l'utilisation des charges polymère A et B.

III-3. Essai 3

Dans cet essai, une nouvelle charge de PVAr fonctionnalisé (Z) et réticulé est synthétisée comme décrit précédemment à l'Essai 1, mais selon une plus grande échelle. Elle est ensuite incorporée à une composition de caoutchouc sous la forme d'un masterbatch obtenu par coprécipitation du latex de charge PVAr et d'un latex de caoutchouc naturel (NR). Ladite composition utilisant les nanoparticules de PVAr conformes à l'invention est finalement comparée à une composition de caoutchouc témoin à base de NR et chargée conventionnellement de silice HDS.

III-3-A. Synthèse de la charge PVAr

Comme dans les essais précédents, la polymérisation radicalaire en émulsion est réalisée en milieu tamponné (pH égal à 7), avec introduction simultanée dans un réacteur du styrène, du MTSP (produit Aldrich), et d'un mélange de DVB et EVB (produit DVB de Fluka) ; ledit mélange a été préalablement lavé 3 fois par une solution aqueuse de soude 1M, puis lavé à l'eau jusqu'à pH neutre.

Les différents monomères sont préalablement soumis à un barbotage d'azote, ainsi que les solutions aqueuses utilisées à l'exception de la solution de SDS (barbotage à l'état de poudre). La réaction est menée dans un réacteur de 30 litres muni d'une agitation mécanique. Après introduction de 16,3 l d'eau et un barbotage à l'azote de 30 min sous agitation, la température est portée à 60 °C. Ensuite sont introduits successivement 965 ml d'une solution aqueuse de SDS à 0,9 mol/l 965 ml à 1 mol/l d'une solution tampon équimolaire d'hydrogéno-phosphate de sodium et de dihydrogénophosphate d'ammonium. A cette solution tamponnée à pH 7, agitée lentement à 150 tr/min et chauffée à 60°C, est ajoutée la charge monomères composée de 701 g de styrène (soit une fraction pondérale de 37%), 478 g de MTSP (fraction pondérale de 25%), 361,5 g de DVB (fraction pondérale de 19%) et 361,5 g de EVB (fraction pondérale de 19%) (total 1902 g de monomères).

Sous forte agitation (350 tr/min) sont alors ajoutés à l'émulsion résultante 695 ml d'une solution aqueuse de persulfate de potassium (0,125 mol/l). Après 2h 45min à 60°C sous agitation, 345 ml d'une solution aqueuse d'hydroquinone (0,5 mol/l) sont ajoutés au milieu de polymérisation. Le milieu réactionnel est refroidi et dilué avec 42 l d'eau avant mélange avec le latex d'élastomère, soit 63,3 l de latex de charge PVAr fonctionnalisé (Z) à 28,5 g/l (1807 g de charge).

Les caractéristiques physico-chimiques du latex de charge ainsi préparé sont sensiblement identiques à celles trouvées pour le produit synthétisé à plus petite échelle (Essai 1). En particulier, l'analyse montre que les nanoparticules (particules élémentaires) de l'invention se présentent sous forme de nanobilles qui ont en majorité un diamètre compris entre 20 et 60 nm (diamètre circulaire moyen d'environ 30 nm). La densité de la chargée, mesurée sur poudre, est égale à 1,1 g/$cm^3$.

III-3-B. Préparation du masterbatch

Le latex de charge PVAr est incorporé à du caoutchouc naturel pour obtention d'un masterbatch. Le taux de charge PVAr visé dans le masterbatch, comme dans la composition de caoutchouc finale, est de 39 pce. La quantité de matière sèche dans le latex NR est déterminée par pesée, sur extrait sec. Avant de préparer le masterbatch, le latex de NR est ensuite dilué à l'eau jusqu'à un teneur de 200 g/l de NR.

Le latex de charge PVAr dilué et refroidi à température ambiante est ajouté au latex de NR dilué à raison de 39 pce de charge (soit 23 1 de latex de NR à 200 g/l). Ensuite 64 g d'antioxydant (N-(1,3-diméthylbutyl)-N'-phenyl-p-phénylènediamine) sont ajoutés sous forme d'une émulsion aqueuse et le mélange résultant est homogénéisé doucement. A raison de 2 l/min, ce mélange est alors ajouté sur 168 l de méthanol fortement agité, pour précipitation du masterbatch.

Le précipité ainsi obtenu est filtré, rincé avec de l'eau, puis le méthanol est enlevé par distillation à la vapeur d'eau. Le masterbatch est ensuite lavé à l'eau pour élimination du tensioactif et des sels tampon, par plusieurs cycles de dilution et décantations successives jusqu'à faible moussage résiduel constant des eaux de lavage et test négatif des eaux de lavage au nitrate d'argent. Le masterbatch ainsi lavé est filtré et ensuite séché sous pression réduite (sous azote) à 60°C pendant 2 jours.

III-3-C. Tests de caoutchouterie

Deux compositions de caoutchouc NR sont ensuite préparées comme indiqué précédemment pour l'Essai 1 (température de tombée d'environ 145°C), ces deux compositions différant seulement par la nature de leur charge renforçante, comme suit:

- composition C-6 : silice HDS (témoin) ;
- composition C-7 : PVAr fonctionnalisé MTSP (invention).

A titre d'exemples d'application, de telles compositions de caoutchouc sont typiquement utilisables dans les parties de systèmes de liaison au sol, notamment de pneumatiques, utilisant habituellement des matrices de caoutchouc à base de NR, comme par exemple les appuis internes de sécurité pour pneumatiques, les flancs, les zones bourrelet des pneumatiques, les sous-couches de bandes de roulement ainsi que les bandes de roulement de ces pneumatiques notamment pour véhicule Poids-lourd.

Le taux de charge renforçante a été ajusté à iso-fraction volumique de charge (même volume - soit environ

17% - de charge dans chaque composition). La surface spécifique de la charge polymère étant plus basse, la quantité d'agent de couplage TESPT introduit dans la composition C-7 est donc nettement plus faible. Dans la composition C-7, la charge PVAr représente environ 97% (en volume), de la totalité de la charge renforçante, cette dernière comportant une faible proportion (1 pce) de noir de carbone.

Les tableaux 5 et 6 donnent successivement la formulation des différentes compositions (tableau 5 - taux des différents produits exprimés en pce), leurs propriétés avant et après cuisson à 150°C pendant 30 min (tableau 6). La Figure 5 reproduit les courbes de module sécant vrai (en MPa) en fonction de l'allongement (en %) ; ces courbes sont notées C6 et C7 et correspondent respectivement aux compositions C-6 et C-7.

L'examen des différents résultats du tableau 6 montre, pour la composition préparée conformément à l'invention (C-7) comparée à la composition témoin (C-6) :

- à l'état cru, une sécurité au grillage (Ti) et une cinétique de vulcanisation (constante K) voisines ou même améliorées ;
- une réduction très sensible de la masse volumique (-14% environ) ;
- après cuisson, des valeurs plus élevées de module sous très forte déformation (voir valeurs de M600) ; la Figure 5 annexée confirme bien les résultats ci-dessus : on voit que la courbe C7 est située nettement au-dessus de la courbe C6 pour les plus fortes déformations, l'écart entre les deux courbes s'accentuant lorsque l'allongement augmente ; ceci illustre un niveau de renforcement élevé offert par la charge PVAr, au moins égal sinon supérieur à celui offert par la silice HDS de référence ;
- enfin et surtout, ce qui confirme largement tous les résultats précédents observés avec un élastomère diénique synthétique (SBR), des propriétés d'hystérèse qui sont cette fois encore fortement améliorées (valeurs de $(\tan(\delta)_{max}$ et de $\Delta G^*$ très sensiblement réduites).

En conclusion, les nanoparticules de PVAr conformes à l'invention, grâce à leur densité très fortement réduite par rapport à une charge renforçante conventionnelle telle que noir de carbone ou silice HDS, permettent de diminuer de manière très sensible le poids des compositions polymériques.

Cet objectif est atteint non seulement sans dégradation du renforcement, synonyme de résistance à l'usure ou à la fissuration, par rapport à ces charges conventionnelles, mais encore en permettant une réduction notable de l'hystérèse, synonyme d'une résistance au roulement ou d'un échauffement encore améliorés par rapport à une charge inorganique renforçante conventionnelle telle qu'une silice HDS.

Enfin, un avantage remarquable de la charge PVAr doit être souligné : la masse volumique de la matrice polymérique devenant sensiblement égale à celle de la charge PVAr elle-même, il devient ainsi possible d'augmenter le taux de charge renforçante sans augmenter la densité de ladite matrice polymérique.

Les nanoparticules de l'invention sont avantageusement utilisables comme charge renforçante de tout type de matrice polymérique, que les polymères soient notamment thermoplastiques, thermodurcissables, ou encore des élastomères (à titre d'exemples des polyamides, polyesters, polyoléfines telles que polypropylène, polyéthylène, PVC, polycarbonates, polyacryliques, résines époxy, polysiloxanes, polyuréthanes, élastomères diéniques).

**Tableau 1**

| Composition N°: | C-1 | C-2 |
|---|---|---|
| SBR (1) | 100 | 100 |
| silice HDS (2) | 77 | - |
| charge PVAr (3) | - | 39 |
| agent de couplage (4) | 6.2 | 1.8 |
| noir de carbone (N234) | .2 | 2 |
| huile aromatique (5) | 37.5 | 37.5 |
| ZnO | 2.5 | 2.5 |
| acide stéarique | 2 | 2 |
| antioxydant (6) | 1.9 | 1.9 |
| soufre | 1.5 | 1.5 |

(suite)

| Composition N°: | C-1 | C-2 |
|---|---|---|
| accélérateur (7) | 2.5 | 2.5 |

(1) SBR (synthèse décrite au paragraphe III-1-B);
(2) silice HDS ("Zeosil" type "1165MP" de la société Rhodia) ;
(3) PVAr fonctionnalisé MTSP (synthèse selon paragraphe III-1);
(4) TESPT ("Si69" de la société Degussa) ;
(5) huile aromatique (Exarol MX 140 de la société Total) ;
(6) N-1,3 diméthylbutyl N-phénylparaphénylènediamine ("Santoflex 6-PPD" de la société Flexsys) ;
(7) N-cyclohexyl-2-benzothiazylsulfénamide ("Santocure CBS" de la société Flexsys).

**Tableau 2**

| Composition N°: | C-1 | C-2 |
|---|---|---|
| *Propriétés avant cuisson :* | | |
| Ti(min) | 8 | 12 |
| K($min^{-1}$) | 0.136 | 0.157 |
| masse volumique ($g/cm^3$) | 1.19 | 1.01 |
| *Propriétés après cuisson:* | | |
| M100 (MPa) | 3.7 | 4.8 |
| M300 (MPa) | 11.8 | 13.2 |
| M400 (MPa) | 17.2 | 19.8 |
| contrainte rupture (MPa) | 23.3 | 22.0 |
| allongement rupture (%) | 601 | 484 |
| $\Delta G^*$ | 6.2 | 1.6 |
| $\tan(\delta)_{max}$ | 0.330 | 0.199 |

**Tableau 3**

| Composition N°: | C-3 | C-4 | C-5 |
|---|---|---|---|
| SBR (1) | 100 | 100 | 100 |
| charge PVAr (2) | 39 | - | - |
| charge PVAr (3) | - | 39 | - |
| charge PVAr (4) | - | - | 39 |
| agent de couplage (5) | 1.8 | 1.8 | 1.8 |
| noir de carbone (N234) | 2 | 2 | 2 |
| huile aromatique (6) | 37.5 | 37.5 | 37.5 |
| ZnO | 2.5 | 2.5 | 2.5 |
| acide stéarique | 2 | 2 | 2 |
| antioxydant (7) | 1.9 | 1.9 | 1.9 |
| soufre | 1.5 | 1.5 | 1.5 |

(suite)

| Composition N°: | C-3 | C-4 | C-5 |
|---|---|---|---|
| accélérateur (8) | 2.5 | 2.5 | 2.5 |

(1) SBR (synthèse décrite au paragraphe III-1-B) ;
(2) charge A (PVAr fonctionnalisé MTSP) ;
(3) charge B (PVAr fonctionnalisé TSES) ;
(4) charge C (PVAr fonctionnalisé HEMA) ;
(5) TESPT ("Si69" de la société Degussa) ;
(6) huile aromatique (Exarol MX 140 de la société Total) ;
(7) N-1,3 diméthylbutyl N-phénylparaphénylènediamine ("Santoflex 6-PPD" de la société Flexsys) ;
(8) N-cyclohexyl-2-benzothiazylsulfénamide ("Santocure CBS" de la société Flexsys).

**Tableau 4**

| Composition N°: | C-3 | C-4 | C-5 |
|---|---|---|---|
| masse volumique ($g/cm^3$) | 1.01 | 1.01 | 1.01 |
| *Propriétés après cuisson:* | | | |
| M100 (MPa) | 4.8 | 4.0 | 3.5 |
| M300 (MPa) | 13.2 | 12.2 | 7.5 |
| $\Delta G^*$ | 1.6 | 1.2 | 4.3 |
| $\tan(\delta)_{max}$ | 0.199 | 0.197 | 0.291 |

**Tableau 5**

| Composition N°: | C-6 | C-7 |
|---|---|---|
| NR (1) | 100 | 100 |
| silice HDS (2) | 50 | - |
| charge PVAr (3) | - | 25.7 |
| noir de carbone (N234) | 1 | 1 |
| agent de couplage (4) | 4 | 1.16 |
| ZnO | 3 | 3 |
| acide stéarique | 2.5 | 2.5 |
| antioxydant (5) | 2.0 | 2.0 |
| soufre | 1.5 | 1.5 |
| accélérateur (6) | 1.8 | 1.8 |

(1) caoutchouc naturel ;
(2) silice HDS ("Zeosil" type "1165MP" de la société Rhodia) ;
(3) PVAr fonctionnalisé MTSP ;
(4) TESPT ("Si69" de la société Degussa) ;
(5) N-1,3 diméthylbutyl N-phénylparaphénylènediamine ("Santoflex 6-PPD" de la société Flexsys) ;
(6) N-cyclohexyl-2-benzothiazylsulfénamide ("Santocure CBS" de la société Flexsys).

**Tableau 6**

| Composition N°: | C-6 | C-7 |
|---|---|---|
| *Propriétés avant cuisson :* | | |
| Ti (min) | 9 | 10 |
| K ($min^{-1}$) | 0.307 | 0.381 |
| masse volumique ($g/cm^3$) | 1.15 | 0.99 |
| *Propriétés après cuisson:* | | |
| M100 (MPa) | 3.4 | 4.1 |
| M300 (MPa) | 11.1 | 9.8 |
| M400 (MPa) | 16.7 | 15.8 |
| M600 (MPa) | 30.4 | 34.6 |
| contrainte rupture (MPa) | 29.2 | 29.6 |
| allongement rupture (%) | 644 | 600 |
| ΔG* | 1.92 | 0.83 |
| $tan(\delta)_{max}$ | 0.198 | 0.114 |

## Revendications

**1.** Nanoparticules de polyvinylaromatique fonctionnalisé et réticulé, utilisables notamment comme charge renforçante dans une matrice polymérique, **caractérisées en ce que** ledit polyvinylaromatique est un copolymère d'au moins :

- un comonomère "A" vinylaromatique ;
- un comonomère "B" porteur d'une fonction notée Z de formule ≡ Si - X, X représentant un groupe hydroxyle ou hydrolysable ;
- un comonomère "C" réticulant au moins bifonctionnel et polymérisable par réaction d'addition, le comonomère C pouvant être vinylaromatique, dans ce cas identique au ou différent du comonomère A, ou non vinylaromatique,

et **en ce que** le diamètre moyen des nanoparticules est compris entre 10 et 60 nm..

**2.** Nanoparticules selon la revendication 1, X étant un halogène.

**3.** Nanoparticules selon la revendication 2, X étant le chlore.

**4.** Nanoparticules selon la revendication 1, X répondant à la formule OR dans laquelle R représente l'hydrogène ou un groupe hydrocarboné monovalent, linéaire ou ramifié.

**5.** Nanoparticules selon la revendication 4, R étant choisi parmi l'hydrogène et les alkyles, alkoxyalkyles, cycloalkyles et aryles comportant de 1 à 15 atomes de carbone.

**6.** Nanoparticules selon la revendication 5, R étant choisi parmi l'hydrogène et les alkyles en $C_1$-$C_8$, alkoxyalkyles en $C_2$-$C_8$, cycloalkyles en $C_5$-$C_{18}$ et aryles en $C_6$-$C_{12}$.

**7.** Nanoparticules selon la revendication 6, Z répondant à l'une des formules :

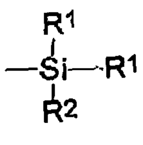 ; 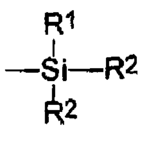 ; 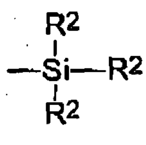 ,

dans lesquelles

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$;
- les radicaux $R^2$, substitués ou non substitués, identiques ou différentes entre eux, sont choisis dans le groupe constitué par l'hydroxyle, les alkoxyles en $C_1$-$C_8$ et les cycloalkoxyles en $C_5$-$C_8$.

**8.** Nanoparticules selon la revendication 7, les radicaux $R^1$ étant choisis dans le groupe constitué par les alkyles en $C_1$-$C_4$, cyclohexyle et phényle.

**9.** Nanoparticules selon la revendication 8, les radicaux $R^1$ étant choisis dans le groupe constitué par les alkyles en $C_1$-$C_4$.

**10.** Nanoparticules selon l'une quelconque des revendications 7 à 9, les radicaux $R^2$ étant choisis dans le groupe constitué par l'hydroxyle et les alkoxyles en $C_1$-$C_6$.

**11.** Nanoparticules selon la revendication 10, les radicaux $R^2$ étant choisis dans le groupe constitué par l'hydroxyle et les alkoxyles en $C_1$-$C_4$.

**12.** Nanoparticules selon la revendication 11, les radicaux $R^1$ étant choisis parmi méthyle et éthyle et les radicaux $R^2$ étant choisis dans le groupe constitué par hydroxyle, méthoxyle et éthoxyle.

**13.** Nanoparticules selon l'une quelconque des revendications 1 à 12, la fraction pondérale majoritaire du copolymère étant une fraction vinylaromatique.

**14.** Nanoparticules selon l'une quelconque des revendications 1 à 13, le ou les comonomère(s) vinylaromatique(s) étant choisi(s) parmi les comonomères styréniques.

**15.** Nanoparticules selon la revendication 14, les comonomère styréniques étant choisis dans le groupe constitué par le styrène, l'éthylvinylbenzène, le divinylbenzène, et les mélanges de tels monomères.

**16.** Nanoparticules selon l'une quelconque des revendications 1 à 15, le comonomère B étant choisi dans le groupe constitué par les acrylates et méthacrylates d'hydroxysilyl-alkyl($C_1$-$C_4$), les acrylates et méthacrylates d'alkoxy ($C_1$-$C_4$)silyl-alkyl($C_1$-$C_4$), et les mélanges de tels monomères.

**17.** Nanoparticules selon la revendication 16, le comonomère B étant choisi dans le groupe constitué par les acrylates et les méthacrylates d'hydroxy-silyl-alkyl($C_1$-$C_4$), de méthoxy-silyl-alkyl($C_1$-$C_4$), d'éthoxy-silyl-alkyl($C_1$-$C_4$), et les mélanges de tels monomères.

**18.** Nanoparticules selon la revendication 17, le comonomère B étant choisi dans le groupe constitué par les acrylates et les méthacrylates d'hydroxy-silylpropyle, de méthoxy-silylpropyle, d'éthoxy-silylpropyle et les mélanges de tels monomères.

**19.** Nanoparticules selon la revendication 18, le comonomère B étant l'acrylate ou le méthacrylate de triméthoxysilylpropyle.

**20.** Nanoparticules selon l'une quelconque des revendications 1 à 15, le comonomère B étant choisi dans le groupe constitué par les styryl-alkyl($C_1$-$C_4$)-hydroxysilanes, les styryl-alkyl($C_1$-$C_4$)-alkoxy($C_1$-$C_4$)silanes, et les mélanges de tels monomères.

**21.** Nanoparticules selon la revendication 20, le comonomère B étant choisi dans le groupe constitué par les styryl-alkyl ($C_1$-$C_4$)-hydroxysilanes, styryl-alkyl($C_1$-$C_4$)-méthoxysilanes, styryl-alkyl($C_1$-$C_4$)-éthoxysilanes et les mélanges de tels monomères.

**22.** Nanoparticules selon la revendication 21, le comonomère B étant choisi dans le groupe constitué par les styryléthylhydroxysilanes, les styryléthylméthoxysilanes, les styryléthyléthoxysilanes et les mélanges de tels monomères.

**23.** Nanoparticules selon la revendication 22, le comonomère B étant le styryléthyltriméthoxysilane.

**24.** Nanoparticules selon l'une quelconque des revendications 1 à 23, le taux molaire de comonomère B dans ledit

polyvinylaromatique étant supérieur à 5%.

**25.** Nanoparticules selon la revendication 24, le taux molaire de comonomère B dans ledit polyvinylaromatique étant compris 5 et 30%.

**26.** Nanoparticules selon la revendication 25, le taux molaire de comonomères B dans ledit polyvinylaromatique étant compris 5 et 20%.

**27.** Nanoparticules selon l'une quelconque des revendications 1 à 26, le comonomère C étant porteur d'au moins deux groupes insaturés polymérisables.

**28.** Nanoparticules selon la revendication 27, les groupes insaturés polymérisables étant des groupes éthyléniques.

**29.** Nanoparticules selon l'une quelconque des revendications 1 à 28, le polyvinylaromatique étant obtenu par polymérisation par voie radicalaire.

**30.** Nanoparticules selon l'une quelconque des revendications 1 à 29, le comonomère C étant choisi dans le groupe constitué par les di(méth)acrylates de polyols, les di(meth)acrylamides d'alkylène, les composés vinylaromatiques porteurs d'au moins deux groupements vinyliques, et les mélanges de tels comonomères.

**31.** Nanoparticules selon la revendication 30, le comonomère C étant un composé styrénique.

**32.** Nanoparticules selon la revendication 31, le composé styrénique étant choisi dans le groupe constitué par le diisopropenylbenzène, le divinylbenzène, le trivinylbenzène, et les mélanges de tels comonomères.

**33.** Nanoparticules selon l'une quelconque des revendications 1 à 32, le taux pondéral de comonomère C dans ledit polyvinylaromatique étant supérieur à 5%.

**34.** Nanoparticules selon la revendication 33, le taux pondéral de comonomère C dans ledit polyvinylaromatique étant compris entre 10 et 30%.

**35.** Nanoparticules selon l'une quelconque des revendications 32 à 34, le comonomère C étant le divinylbenzène,

**36.** Nanoparticules selon la revendication 35, le polyvinylaromatique étant un copolymère de styrène, éthylvinylbenzène, divinylbenzène et (méth)acrylate de triméthoxysilylpropyle.

**37.** Nanoparticules selon la revendications 36, le taux pondéral de (méth)acrylate de triméthoxysilylpropyle étant compris entre 10 et 30%.

**38.** Nanoparticules selon la revendication 37, le taux pondéral de (méth)acrylate de triméthoxysilylpropyle étant compris entre 20 et 30%.

**39.** Nanoparticules selon l'une quelconque des revendications 1 à 38, le diamètre moyen des nanoparticules étant compris entre 10 et 40 nm.

**40.** Utilisation de nanoparticules selon l'une quelconque des revendications 1 à 39 pour le renforcement d'une matrice polymériques.

**41.** Utilisation selon la revendication 40, le polymère de la matrice polymérique étant un élastomère.

**42.** Utilisation selon la revendication 41, pour le renforcement d'articles finis ou produits semi-finis en caoutchouc.

**43.** Utilisation selon la revendication 42, pour le renforcement de pneumatiques.

**44.** Masterbatch comportant des nanoparticules selon l'une quelconque des revendications 1 à 39, noyées dans une matrice polymérique.

**45.** Masterbatch selon la revendication 44, le polymère de la matrice polymérique étant un élastomère.

**46.** Procédé d'obtention d'un masterbatch comportant au moins un polymère et une charge sous forme de nanoparticules, comportant les étapes suivantes :

- partir d'un latex du polymère et d'un latex de la charge sous forme de nanoparticules ;
- les mélanger intimement ;
- faire précipiter le mélange ainsi obtenu ;
- puis laver et sécher le précipité ainsi obtenu,

**caractérisé en ce que** ladite charge comporte des nanoparticules de polyvinylaromatique porteur d'une fonction notée Z de formule ≡ Si - X, X représentant un groupe hydroxyle ou hydrolysable et **en ce que** le diamètre moyen des nanoparticules est compris entre 10 et 60 nm.

**47.** Composition polymérique comportant au moins un polymère, des nanoparticules selon l'une quelconque des revendications 1 à 39, et un agent de couplage assurant la liaison entre le polymère et la surface des nanoparticules.

## Claims

**1.** Nanoparticles of a functionalized and crosslinked polyvinylaromatic, which may be used especially as reinforcing filler in a polymeric matrix, **characterized in that** said polyvinylaromatic is a copolymer of at least:

- a vinylaromatic comonomer "A";
- a comonomer "B" carrying a functional group denoted by Z of formula ≡Si-X, X representing a hydroxyl or hydrolyzable group;
- a crosslinking comonomer "C" which is at least bifunctional and polymerizable by means of an addition reaction, it being possible for comonomer C to be vinylaromatic, in this case identical or different to comonomer A or non-vinylaromatic,

and **in that** the mean diameter of the nanoparticles is between 10 and 60 nm.

**2.** The nanoparticles according to claim 1, X being a halogen.

**3.** The nanoparticles according to claim 2, X being chlorine.

**4.** The nanoparticles according to claim 1, X satisfying the formula OR in which R represents hydrogen or a monovalent, linear or branched, hydrocarbon group.

**5.** The nanoparticles according to claim 4, R being chosen from hydrogen, alkyls, alkoxyalkyls, cycloalkyls and aryls containing 1 to 15 carbon atoms.

**6.** The nanoparticles according to claim 5, R being chosen from hydrogen, $C_1$-$C_8$ alkyls, $C_2$-$C_8$ alkoxyalkyls, $C_5$-$C_{10}$ cycloalkyls and $C_6$-$C_{12}$ aryls.

**7.** The nanoparticles according to claim 6, Z satisfying one of the formulae:

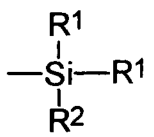 ; 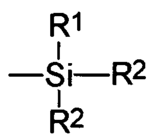 ; 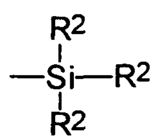 ,

in which:

- the radicals $R^1$, which are substituted or unsubstituted, identical or different, are chosen from the group consisting of $C_1$-$C_8$ alkyls, $C_5$-$C_8$ cycloalkyls and $C_6$-$C_{12}$ aryls; and
- the radicals $R^2$, which are substituted or unsubstituted, identical or different, are chosen from the group consisting of hydroxyl, $C_1$-$C_8$ alkoxyls and C5-$C_8$ cycloalkoxyls.

**8.** The nanoparticles according to claim 7, the radicals $R^1$ being chosen from the group consisting of $C_1$-$C_4$ alkyls, cyclohexyl and phenyl.

**9.** The nanoparticles according to claim 8, the radical $R^1$ being chosen from the group consisting of $C_1$-$C_4$alkyls.

**10.** The nanoparticles according to any one of claims 7 to 9, the radicals $R^2$ being chosen from the group consisting of hydroxyl and $C_1$-$C_6$ alkoxyls.

**11.** The nanoparticles according to claim 10, the radicals $R^2$ being chosen from the group consisting of hydroxyl and $C_1$-$C_4$ alkoxyls.

**12.** The nanoparticles according to claim 11, the radicals $R^1$ being chosen from methyl and ethyl, and the radicals $R^2$ being chosen from the group consisting of hydroxyl, methoxyl and ethoxyl.

**13.** The nanoparticles according to any one of claims 1 to 12, the predominent weight fraction of the copolymer being a vinylaromatic fraction.

**14.** The nanoparticles according to any of claims 1 to 13, the vinylaromatic comonomer or comonomers being chosen from styrene comonomers.

**15.** The nanoparticles according to claim 14, the styrene comonomers being chosen from the group consisting of styrene, ethylvinylbenzene, divinylbenzene and mixtures of such monomers.

**16.** The nanoparticles according to any one of claims 1 to 15, comonomer B being chosen from the group consisting of hydroxysilyl($C_1$-$C_4$)alkyl acrylates and methacrylates, ($C_1$-$C_4$)alkoxysilyl($C_1$-$C_4$)alkyl acrylates and methacrylates and mixtures of such monomers.

**17.** The nanoparticles according to claim 16, comonomer B being chosen from the group consisting of hydroxysilyl ($C_1$-$C_4$)alkyl acrylates and methacrylates, methoxysilyl($C_1$-$C_4$)alkyl acrylates and methacrylates, ethoxysilyl($C_1$-$C_4$) alkyl acrylates and methacrylates and mixtures of such monomers.

**18.** The nanoparticles according to claim 17, comonomer B being chosen from the group consisting of hydroxysilylpropyl acrylates and methacrylates, methoxysilylpropyl acrylates and methacrylates, ethoxysilylpropyl acrylates and methacrylates, and mixtures of such monomers.

**19.** The nanoparticles according to claim 18, comonomer B being trimethoxysilylpropyl acrylate or trimethoxysilylpropyl methacrylate.

**20.** The nanoparticles according to any one of claims 1 to 15, comonomer B being chosen from the group consisting of styryl($C_1$-$C_4$)alkylhydroxysilanes, styryl($C_1$-$C_4$)alkyl($C_1$-$C_4$)alkoxysilanes and mixtures of such monomers.

**21.** The nanoparticles according to claim 20, comonomer B being chosen from the group consisting of styryl($C_1$-$C_4$) alkylhydroxysilanes, styryl($C_1$-$C_4$)alkylmethoxysilanes, styryl($C_1$-$C_4$)alkylethoxysilanes and mixtures of such monomers.

**22.** The nanoparticles according to claim 21, comonomer B being chosen from the group consisting of styrylethylhydroxysilanes, styrylethylmethoxysilanes, styrylethylethoxysilanes and mixtures of such monomers.

**23.** The nanoparticles according to claim 22, comonomer B being styrylethyltrimethoxysilane.

**24.** The nanoparticles according to any one of claims 5 to 23, the molar content of comonomer B in said polyvinylaromatic being greater than 5%.

**25.** The nanoparticles according to claim 24, the molar content of comonomer B in said polyvinylaromatic being between 5 and 30%.

**26.** The nanoparticles according to claim 25, the molar content of comonomer B in said polyvinylaromatic being between 5 and 20%.

**27.** The nanoparticles according to any one of claims 1 to 26, comonomer C carrying at least two polymerizable unsaturated groups.

**28.** The nanoparticles according to claim 27, the polymerizable unsaturated groups being ethylenic groups.

**29.** The nanoparticles according to any one of claims 1 to 28, the polyvinylaromatic being obtained by radical polymerization.

**30.** The nanoparticles according to any one of claims 1 to 29, comonomer C being chosen from the group consisting of di(meth)acrylates of polyols, alkylene di(meth)acrylamides, vinylaromatic compounds carrying at least two vinyl groups, and mixtures of such comonomers.

**31.** The nanoparticles according to claim 30, comonomer C being a styrene compound.

**32.** The nanoparticles according to claim 31, the styrene compound being chosen from the group consisting of diisopropenylbenzene, divinylbenzene, trivinylbenzene and mixtures of these comonomers.

**33.** The nanoparticles according to any one of claims 1 to 32, the weight content of comonomer C in said polyvinylaromatic being greater than 5%.

**34.** The nanoparticles according to claim 33, the weight content of comonomer C in said polyvinylaromatic being between 10 and 30%.

**35.** The nanoparticles according to any one of claims 32 to 34, comonomer C being divinylbenzene.

**36.** The nanoparticles according to claim 35, the polyvinylaromatic being a copolymer of styrene, ethylvinylbenzene, divinylbenzene and trimethoxysilylpropyl(meth)acrylate.

**37.** The nanoparticles according to claim 36, the weight content of trimethoxysilylpropyl(meth)acrylate being between 10 and 30%.

**38.** The nanoparticles according to claim 37, the weight content of trimethoxysilylpropyl(meth)acrylate being between 20 and 30%.

**39.** The nanoparticles according to any one of claims 1 to 38, the mean diameter of the nanoparticles being between 10 and 40 nm.

**40.** The use of nanoparticles according to any one of claims 1 to 40 for the reinforcement of a polymeric matrix.

**41.** The use according to claim 40, the polymer of the polymeric matrix being an elastomer.

**42.** The use according to claim 41, for the reinforcement of finished articles or semifinished products made of rubber.

**43.** The use according to claim 42, for the reinforcement of tires.

**44.** A masterbatch comprising nanoparticles according to any one of claims 1 to 39 which are embedded in a polymeric matrix.

**45.** The masterbatch according to claim 44, the polymer of the polymeric matrix being an elastomer.

**46.** A process for obtaining a masterbatch comprising at least a polymer and a filler in the form of nanoparticles, comprising the following steps:

- a latex of the polymer and a latex of the filler in the form of nanoparticles are initially obtained;
- the latices are intimately mixed;
- the mixture thus obtained is precipitated; and
- the precipitate thus obtained is then washed and dried,

**characterized in that** said filler comprises nanoparticles of a polyvinylaromatic carrying a functional group denoted by Z of formula ≡ Si - X, X representing a hydroxyl or hydrolyzable group and **in that** the mean diameter of the nanoparticles is between 10 and 60 nm.

**47.** A polymeric composition comprising at least a polymer, nanoparticles according to any one of claims 1 to 39 and a coupling agent for bonding between the polymer and the surface of the nanoparticles.

**Patentansprüche**

**1.** Nanopartikel aus einem funktionalisierten und vernetzten Polyvinylaromaten, die insbesondere als verstärkender Füllstoff in einer Polymermatrix verwendbar sind, **dadurch gekennzeichnet, daß** es sich bei dem Polyvinylaromaten um ein Copolymer aus mindestens:

- einem vinylaromatischen Comonomer "A";
- einem Comonomer "B" mit einer mit Z bezeichneten funktionellen Gruppe der Formel ≡Si-X, wobei X für eine Hydroxylgruppe oder hydrolysierbare Gruppe steht;
- einem mindestens bifunktionellen vernetzenden Comonomer "C", das durch eine Additionsreaktion polymerisierbar ist, wobei das Comonomer C vinylaromatisch, wobei es in diesem Fall mit dem Comonomer A identisch oder von dem Comonomer A verschieden ist, oder nicht vinylaromatisch sein kann;

handelt und der mittlere Durchmesser der Nanopartikel zwischen 10 und 60 nm liegt.

**2.** Nanopartikel nach Anspruch 1, wobei X für ein Halogen steht.

**3.** Nanopartikel nach Anspruch 2, wobei X für Chlor steht.

**4.** Nanopartikel nach Anspruch 1, wobei X der Formel OR entspricht, worin R für Wasserstoff oder eine einwertige, lineare oder verzweigte Kohlenwasserstoffgruppe steht.

**5.** Nanopartikel nach Anspruch 4, wobei R unter Wasserstoff und Alkylgruppen, Alkoxyalkylgruppen, Cycloalkylgruppen und Arylgruppen mit 1 bis 15 Kohlenstoffatomen ausgewählt ist.

**6.** Nanopartikel nach Anspruch 5, wobei R unter Wasserstoff und $C_1$-$C_8$-Alkylgruppen, $C_2$-$C_8$-Alkoxyalkylgruppen, $C_5$-$C_{10}$-Cycloalkylgruppen und $C_6$-$C_{12}$-Arylgruppen ausgewählt ist.

**7.** Nanopartikel nach Anspruch 6, wobei Z einer der Formeln:

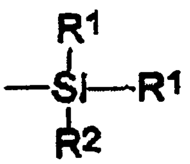 ; 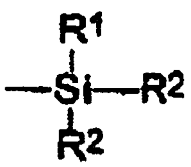 ; 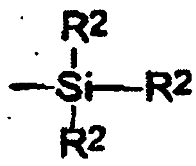 ,

entspricht, worin:

- die Reste $R^1$ substituiert oder unsubstituiert und gleich oder voneinander verschieden sind und unter $C_1$-$C_8$-Alkyl-, $C_5$-$C_8$-Cycloalkyl- oder $C_6$-$C_{12}$-Arylgruppen ausgewählt sind;
- die Reste $R^2$ substituiert oder unsubstituiert und gleich oder voneinander verschieden sind und unter Hydroxyl-, $C_1$-$C_8$-Alkoxy- und $C_5$-$C_8$-Cycloalkoxygruppen ausgewählt sind.

**8.** Nanopartikel nach Anspruch 7, wobei die Reste $R^1$ aus der Gruppe bestehend aus $C_1$-$C_4$-Alkylgruppen, Cyclohexyl und Phenyl ausgewählt sind.

**9.** Nanopartikel nach Anspruch 8, wobei die Reste $R^1$ aus der Gruppe bestehend aus $C_1$-$C_4$-Alkylgruppen ausgewählt

sind.

**10.** Nanopartikel nach einem der Ansprüche 7 bis 9, wobei die Reste $R^2$ aus der Gruppe bestehend aus Hydroxyl und $C_1$-$C_6$-Alkoxygruppen ausgewählt sind.

**11.** Nanopartikel nach Anspruch 10, wobei die Reste $R^1$ aus der Gruppe bestehend aus Hydroxyl und $C_1$-$C_4$-Alkoxygruppen ausgewählt sind.

**12.** Nanopartikel nach Anspruch 11, wobei die Reste $R^1$ unter Methyl und Ethyl ausgewählt sind und die Reste $R^2$ aus der Gruppe bestehend aus Hydroxyl, Methoxy und Ethoxy ausgewählt sind.

**13.** Nanopartikel nach einem der Ansprüche 1 bis 12, wobei es sich bei dem mehrheitlichen Gewichtsanteil des Copolymers um einen vinylaromatischen Anteil handelt.

**14.** Nanopartikel nach einem der Ansprüche 1 bis 13, wobei das vinylaromatische Comonomer bzw. die vinylaromatischen Comonomere unter Styrol-Comonomeren ausgewählt ist bzw. sind.

**15.** Nanopartikel nach Anspruch 14, wobei die Styrol-Comonomere aus der Gruppe bestehend aus Styrol, Ethylvinylbenzol, Divinylbenzol und Mischungen derartiger Monomere ausgewählt sind.

**16.** Nanopartikel nach einem der Ansprüche 1 bis 15, wobei das Comonomer B aus der Gruppe bestehend aus Hydroxysilyl-($C_1$-$C_4$)-alkylacrylaten und -methacrylaten, ($C_1$-$C_9$)-Alkoxysilyl-($C_1$-$C_4$)-alkylacrylaten und -methacrylaten und Mischungen derartiger Monomere ausgewählt ist.

**17.** Nanopartikel nach Anspruch 16, wobei das Comonomer B aus der Gruppe bestehend aus Hydroxysilyl-($C_1$-$C_4$)-alkylacrylaten und -methacrylaten, Methoxy-silyl-($C_1$-$C_9$)-alkylacrylaten und -methacrylaten, Ethoxysilyl-($C_1$-$C_9$)-alkylacrylaten und -methacrylaten und Mischungen derartiger Monomere ausgewählt ist.

**18.** Nanopartikel nach Anspruch 17, wobei das Comonomer B aus der Gruppe bestehend aus Hydroxysilylpropylacrylaten und -methacrylaten, Methoxysilylpropylacrylaten und -methacrylaten, Ethoxysilylpropylacrylaten und -methacrylaten und Mischungen derartiger Monomere ausgewählt ist.

**19.** Nanopartikel nach Anspruch 18, wobei es sich bei dem Comonomer B um Trimethoxysilylpropylacrylat oder -methacrylat handelt.

**20.** Nanopartikel nach einem der Ansprüche 1 bis 15, wobei das Comonomer B aus der Gruppe bestehend aus Styryl-($C_1$-$C_4$)-alkylhydroxysilanen, Styryl-($C_1$-$C_4$) - alkyl-($C_1$-$C_4$)-alkoxysilanen und Mischungen derartiger Monomere ausgewählt ist.

**21.** Nanopartikel nach Anspruch 20, wobei das Comonomer B aus der Gruppe bestehend aus Styryl-($C_1$-$C_4$)-alkylhydroxysilanen, Styryl-($C_1$-$C_4$)-alkylmethoxysilanen, Styryl-($C_1$-$C_4$)-alkylethoxysilanen und Mischungen derartiger Monomere ausgewählt ist.

**22.** Nanopartikel nach Anspruch 21, wobei das Comonomer B aus der Gruppe bestehend aus Styrylethylhydroxysilanen, Styrylethylmethoxysilanen, Styrylethylethoxysilanen und Mischungen derartiger Monomere ausgewählt ist.

**23.** Nanopartikel nach Anspruch 22, wobei es sich bei dem Comonomer B um Styrylethyltrimethoxysilan handelt.

**24.** Nanopartikel nach einem der Ansprüche 1 bis 23, wobei der molare Gehalt von Comonomer B in dem Polyvinylaromaten mehr als 5% beträgt.

**25.** Nanopartikel nach Anspruch 24, wobei der molare Gehalt von Comonomer B in dem Polyvinylaromaten zwischen 5 und 30% liegt.

**26.** Nanopartikel nach Anspruch 25, wobei der molare Gehalt von Comonomer B in dem Polyvinylaromaten zwischen 5 und 20% liegt.

**27.** Nanopartikel nach einem der Ansprüche 1 bis 26, wobei das Comonomer C mindestens zwei polymerisierbare

ungesättigte Gruppen trägt.

**28.** Nanopartikel nach Anspruch 27, wobei es sich bei den polymerisierbaren ungesättigten Gruppen um Ethylengruppen handelt.

**29.** Nanopartikel nach einem der Ansprüche 1 bis 28, wobei der Polyvinylaromat durch radikalische Polymerisation erhalten worden ist.

**30.** Nanopartikel nach einem der Ansprüche 1 bis 29, wobei das Comonomer C aus der Gruppe bestehend aus Polyoldi(meth)acrylaten, Alkylendi(meth)acrylamiden, vinylaromatischen Verbindungen mit mindestens zwei Vinylgruppen und Mischungen derartiger Comonomere ausgewählt ist.

**31.** Nanopartikel nach Anspruch 30, wobei es sich bei dem Comonomer C um eine Styrolverbindung handelt.

**32.** Nanopartikel nach Anspruch 31, wobei die Styrolverbindung aus der Gruppe bestehend aus Diisopropylbenzol, Divinylbenzol, Trivinylbenzol und Mischungen derartiger Comonomere ausgewählt ist.

**33.** Nanopartikel nach einem der Ansprüche 1 bis 32, wobei der Gewichtsgehalt von Comonomer C in dem Polyvinylaromaten mehr als 5% beträgt.

**34.** Nanopartikel nach Anspruch 33, wobei der Gewichtsgehalt von Comonomer C in dem Polyvinylaromaten zwischen 10 und 30% liegt.

**35.** Nanopartikel nach einem der Ansprüche 32 bis 24, wobei es sich bei dem Comonomer C um Divinylbenzol handelt.

**36.** Nanopartikel nach Anspruch 35, wobei es sich bei dem Polyvinylaromaten um ein Copolymer von Styrol, Ethylvinylbenzol, Divinylbenzol und Trimethoxysilylpropyl(meth)acrylat handelt.

**37.** Nanopartikel nach Anspruch 36, wobei der Gewichtsgehalt von Trimethoxysilylpropyl(meth)acrylat zwischen 10 und 30% liegt.

**38.** Nanopartikel nach Anspruch 37, wobei der Gewichtsgehalt von Trimethoxysilylpropyl(meth)acrylat zwischen 20 und 30% liegt.

**39.** Nanopartikel nach einem der Ansprüche 1 bis 38, wobei der mittlere Durchmesser der Nanopartikel zwischen 10 und 40 nm liegt.

**40.** Verwendung von Nanopartikeln nach einem der Ansprüche 1 bis 39 zur Verstärkung einer Polymermatrix.

**41.** Verwendung nach Anspruch 40, wobei es sich bei dem Polymer der Polymermatrix um ein Elastomer handelt.

**42.** Verwendung nach Anspruch 41 zur Verstärkung von Erzeugnissen oder Halbzeugen aus Kautschuk.

**43.** Verwendung nach Anspruch 42 zur Verstärkung von Reifen.

**44.** Masterbatch, umfassend Nanopartikel nach einem der Ansprüche 1 bis 39, die in einer Polymermatrix eingebettet sind.

**45.** Masterbatch nach Anspruch 44, wobei es sich bei dem Polymer der Polymermatrix um ein Elastomer handelt.

**46.** Verfahren zur Herstellung eines Masterbatch, der mindestens ein Polymer und einen Füllstoff in Form von Nanopartikeln umfaßt, bei dem man:

- von einem Latex des Polymers und einem Latex des Füllstoffs in Form von Nanopartikeln ausgeht;
- diese innig mischt;
- die so erhaltene Mischung zum Ausfallen bringt;
- dann den so erhaltenen Niederschlag wäscht und trocknet,

**dadurch gekennzeichnet, daß** der Füllstoff Nanopartikel aus einem Polyvinylaromaten mit einer mit Z bezeichneten funktionellen Gruppe der Formel =Si-X, wobei X für eine Hydroxylgruppe oder hydrolysierbare Gruppe steht, umfaßt und der mittlere Durchmesser der Nanopartikel zwischen 10 und 60 nm liegt.

**47.** Polymerzusammensetzung, umfassend mindestens ein Polymer, Nanopartikel nach einem der Ansprüche 1 bis 39 und ein Kupplungsmittel, das die Bindung zwischen dem Polymer und der Oberfläche der Nanopartikel gewährleistet.

**Fig. 1**

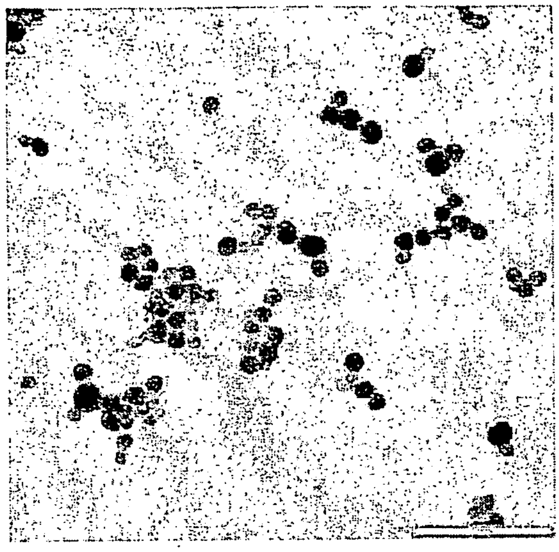

**Fig. 2**

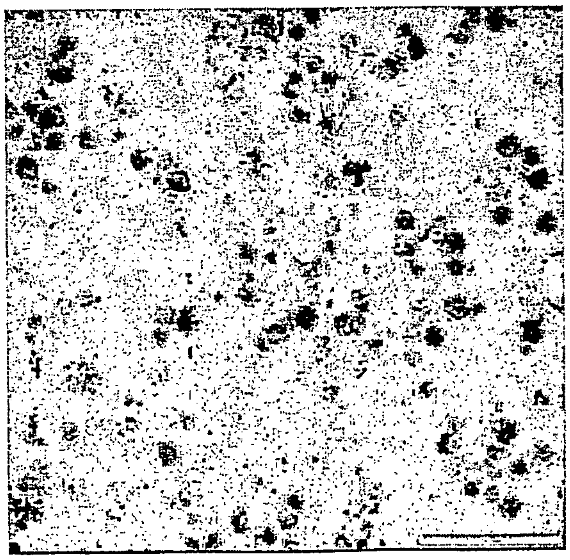

**Fig. 3**

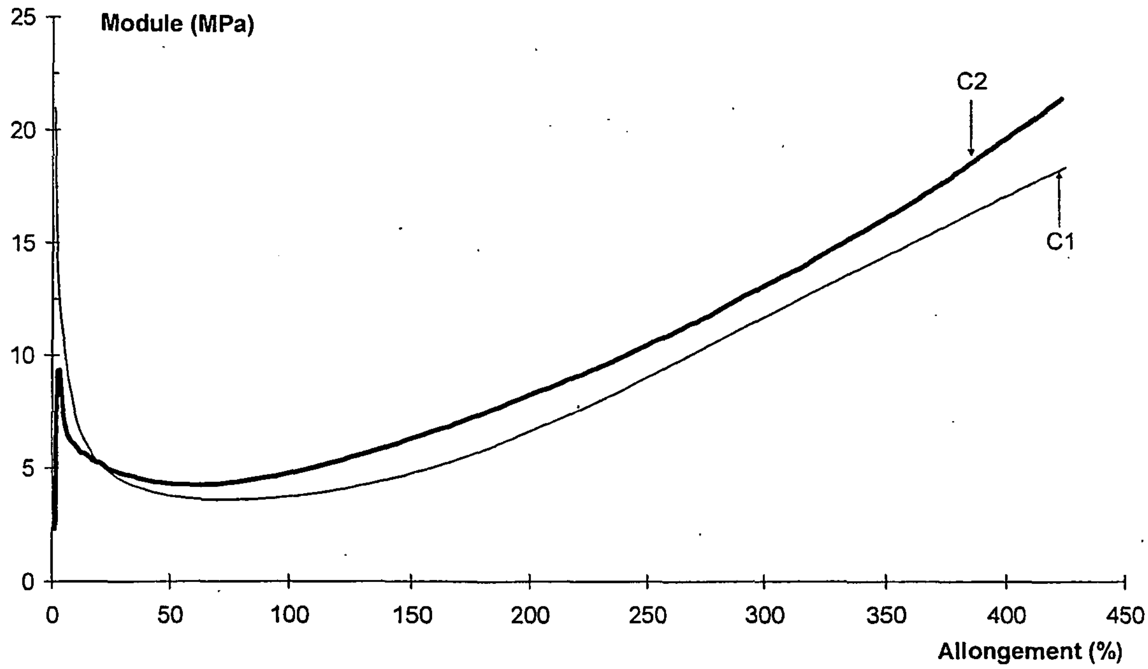
Module (MPa)
25
20
15
10
5
0
0
50
100
150
200
250
300
350
400
450
Allongement (%)
C2
C1

Fig. 4

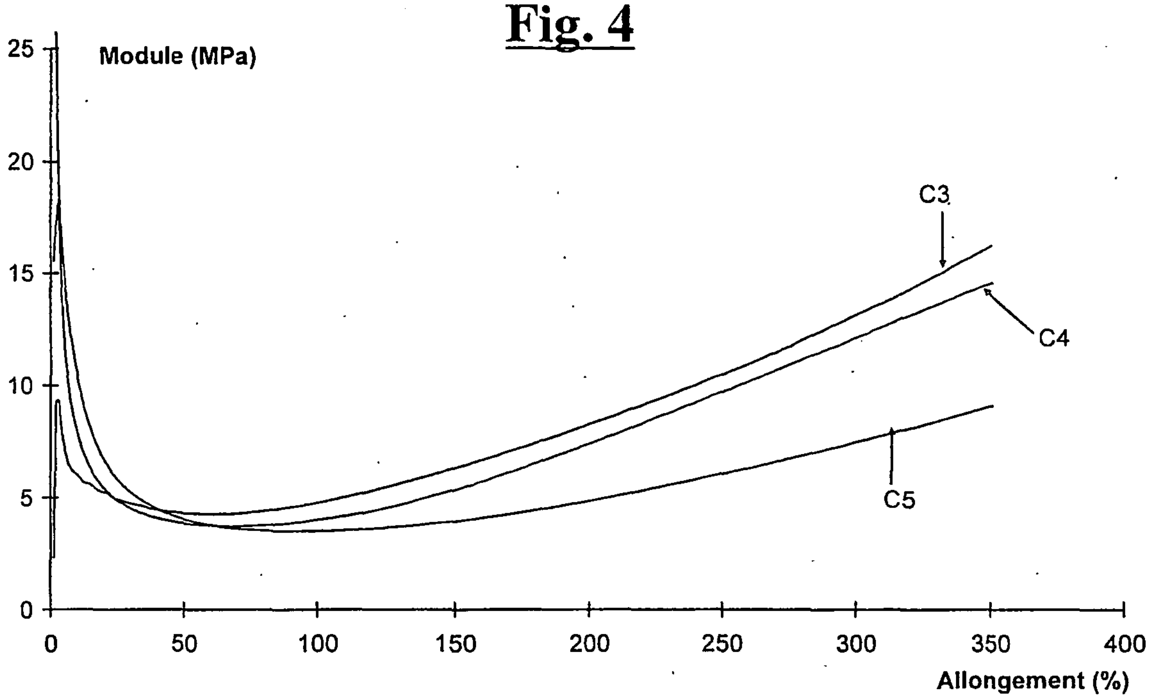
Module (MPa)
25
20
15
10
5
0
0
50
100
150
200
250
300
350
400
Allongement (%)
C3
C4
C5

Fig. 5

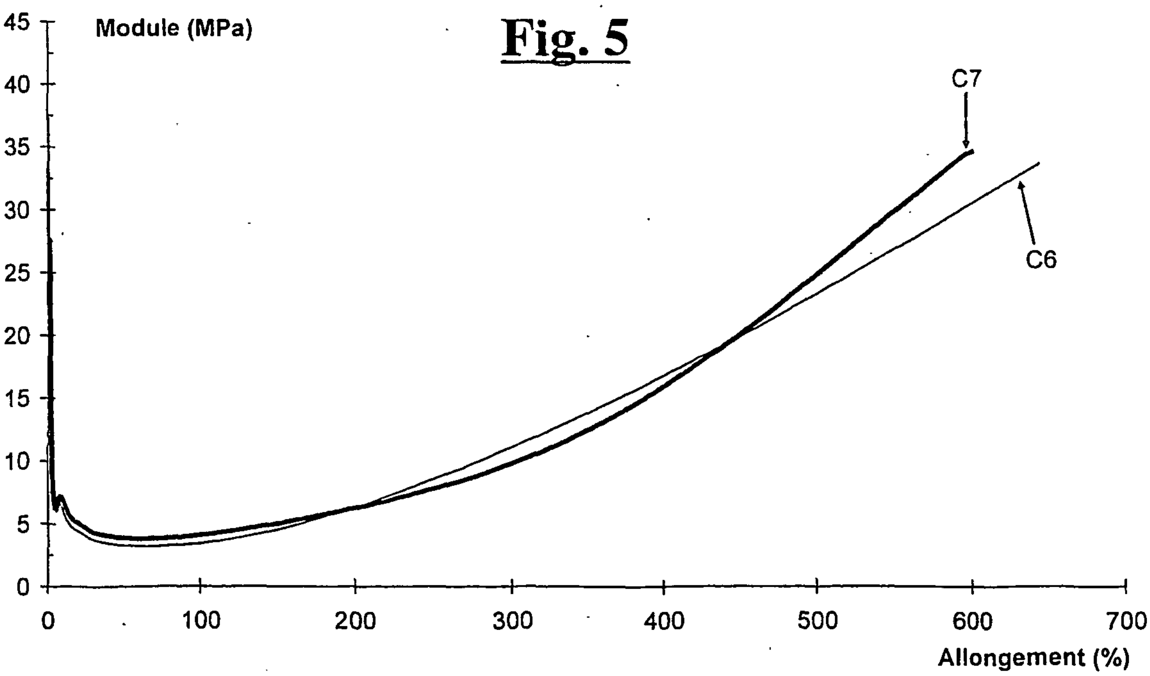
Module (MPa)
45
40
35
30
25
20
15
10
5
0
0
100
200
300
400
500
600
700
Allongement (%)
C7
C6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1063259 A
- US 6399706 B


### Littérature non-brevet citée dans la description


- *Macromolecules,* 2001, vol. 34, 5737
- *Macromolecules,* 2002, vol. 35, 6185
- *Polymer,* 2000, vol. 41, 481